(19) Europäisches Patentamt / European Patent Office / Office européen des brevets

(11) EP 3 007 252 B1

(12) # EUROPEAN PATENT SPECIFICATION

(45) Date of publication and mention of the grant of the patent:
**28.11.2018 Bulletin 2018/48**

(21) Application number: **14804672.5**

(22) Date of filing: **14.05.2014**

(51) Int Cl.:
***H01M 4/04*** (2006.01) ***H01M 4/13*** (2010.01)
***H01M 4/139*** (2010.01) ***H01M 4/62*** (2006.01)

(86) International application number:
**PCT/JP2014/002550**

(87) International publication number:
**WO 2014/192238 (04.12.2014 Gazette 2014/49)**

(54) **SLURRY COMPOSITION FOR LITHIUM-ION SECONDARY BATTERY POSITIVE ELECTRODE, PRODUCTION METHOD FOR LITHIUM-ION SECONDARY BATTERY POSITIVE ELECTRODE, LITHIUM-ION SECONDARY BATTERY POSITIVE ELECTRODE, AND LITHIUM-ION SECONDARY BATTERY**

AUFSCHLÄMMUNGSZUSAMMENSETZUNG FÜR POSITIVELEKTRODEN VON LITHIUM-IONEN-SEKUNDÄRBATTERIEN, VERFAHREN ZUR HERSTELLUNG EINER POSITIVELEKTRODE FÜR LITHIUM-IONEN-SEKUNDÄRBATTERIEN, POSITIVELEKTRODE FÜR LITHIUM-IONEN-SEKUNDÄRBATTERIEN UND LITHIUM-IONEN-SEKUNDÄRBATTERIE

COMPOSITION DE BOUE POUR ÉLECTRODE POSITIVE DE BATTERIE SECONDAIRE LITHIUM-ION, PROCÉDÉ DE PRODUCTION POUR ÉLECTRODE POSITIVE DE BATTERIE SECONDAIRE LITHIUM-ION, ÉLECTRODE POSITIVE DE BATTERIE SECONDAIRE LITHIUM-ION, ET BATTERIE SECONDAIRE LITHIUM-ION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.05.2013 JP 2013113346**

(43) Date of publication of application:
**13.04.2016 Bulletin 2016/15**

(73) Proprietor: **Zeon Corporation**
**Tokyo 100-8246 (JP)**

(72) Inventor: **MARUHASHI, Yutaka**
**Tokyo 100-8246 (JP)**

(74) Representative: **Maiwald Patent- und Rechtsanwaltsgesellschaft mbH**
**Elisenhof**
**Elisenstraße 3**
**80335 München (DE)**

(56) References cited:

**WO-A1-2011/148970**
**WO-A1-2014/021401**
**JP-A- H10 195 310**
**JP-A- 2005 340 072**
**JP-A- 2010 138 325**
**JP-A- 2011 076 981**
**JP-A- 2012 221 685**
**JP-A- 2013 012 357**
**JP-A- 2013 041 821**
**JP-A- 2013 041 821**
**JP-A- 2013 093 123**
**JP-A- 2013 134 884**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 007 252 B1

## Description

TECHNICAL FIELD

This disclosure relates to a slurry composition for the positive electrode of a lithium ion secondary battery, a method of producing the positive electrode for a lithium ion secondary battery, a positive electrode for a lithium ion secondary battery, and a lithium ion secondary battery.

BACKGROUND

Lithium ion secondary batteries, which have characteristics such as compact size, light weight, high energy-density, and rechargeability, are used in a wide variety of applications.

An electrode for a lithium ion secondary battery generally includes a current collector and an electrode mixed material layer (also referred to as an "electrode active material layer") formed on the current collector. The electrode mixed material layer is formed by applying a slurry composition onto the current collector and drying the slurry composition applied on the current collector. The slurry composition is obtained by dispersing for example an electrode active material, a conductive material, and a binder into a dispersion medium.

In producing a positive electrode for a lithium ion secondary battery, an aqueous slurry composition, which uses an aqueous medium as its dispersion medium, is now attracting attention to reduce environmental burdens or the like. Such an aqueous slurry composition that has been proposed for the positive electrode of a lithium ion secondary battery contains a positive electrode active material, a conductive material, a binder (particulate binder), and a viscosity modifier. Conventionally, the composition and blending amounts of an aqueous slurry composition that improve the characteristics of an electrode formed using the slurry composition have been investigated (for example, see JP H10-195310 A (PTL 1)).
PTL 2 relates to a composite particle which includes a positive electrode active material containing nickel, a non-water-soluble granular polymer and a water-soluble polymer having an acid group.

CITATION LIST

Patent Literature

PTL 1: JP H10-195310 A
PTL 2: JP 2013-041821 A

SUMMARY

(Technical Problem)

Using the above aqueous slurry composition to produce a positive electrode leads to bulging of the edge portion in the width direction of the positive electrode mixed material layer (i.e., the edge portion in a direction perpendicular to the direction in which the slurry composition is applied onto the current collector, abbreviated below as the "edge portion") for reasons such as volume contraction when the aqueous slurry composition is applied on the current collector and dried to form a positive electrode mixed material layer. This makes it difficult to produce a desired positive electrode. The bulging along the edge portion of the positive electrode mixed material layer is particularly significant when a viscosity modifier that causes relatively high volume contraction in the drying process is used or when the aqueous slurry composition is applied onto the current collector at high speed.

It was discovered that the above-described bulging along the edge portion can be resolved by blending a water-soluble polymer that contains a monomer unit containing an acid group into the aqueous slurry composition, the water-soluble polymer differing from the water-soluble polymer blended in as a viscosity modifier. Further examination revealed, however, that when preparing an aqueous slurry composition by blending in a water-soluble polymer that contains a monomer unit containing an acid group, bubbles generated upon preparing the slurry composition persist. Thus, the positive electrode formed with such an aqueous slurry composition has numerous defects (or pin holes) caused by the bubbles in the slurry composition in the positive electrode mixed material layer. This results in a failure to produce a desired positive electrode and thus fails to provide a lithium ion secondary battery that has good electrical characteristics (e.g., output characteristics).

It would therefore be helpful to provide an aqueous slurry composition for the positive electrode of a lithium ion

secondary battery that achieves suppression of both the generation of pin holes and the occurrence of bulging along the edge portion of a positive electrode mixed material layer. It would also be helpful to provide a method of producing the positive electrode for a lithium ion secondary battery obtained with the aqueous slurry composition.

It would further be helpful to provide a positive electrode for a lithium ion secondary battery that achieves suppression of both the generation of pin holes and the occurrence of bulging along the edge portion of a positive electrode mixed material layer. It would still further be helpful to provide a lithium ion secondary battery that includes the positive electrode for a lithium ion secondary battery and has good electrical characteristics.

(Solution to Problem)

Extensive studies were made to solve the aforementioned problems. As a result, it was discovered that by including, in an aqueous slurry composition for the positive electrode of a lithium ion secondary battery, a predetermined water-soluble polymer that contains a monomer unit containing an acid group and further blending a sulfosuccinic acid ester or a salt thereof as a surfactant, both generation of pin holes and the occurrence of bulging along the edge portion of a positive electrode mixed material layer can be suppressed upon forming the positive electrode, and furthermore the peel strength of the positive electrode mixed material layer can be increased.

In order to solve the above problem advantageously the disclosed slurry composition for a positive electrode of a lithium ion secondary battery includes a positive electrode active material, a conductive material, a water-soluble polymer, a particulate binder, a surfactant, and water. The water-soluble polymer contains a monomer unit containing an acid group at a ratio of 20% by mass or greater and 70% by mass or less,
viscosity of a 1% by mass water solution of the water-soluble polymer is 1 mPa·s or greater to 1,000 mPa·s or less, and the surfactant includes a sulfosuccinic acid ester or a salt thereof. By thus including, in the slurry composition, a predetermined water-soluble polymer that contains a monomer unit containing an acid group and a sulfosuccinic acid ester or a salt thereof as a surfactant, both generation of pin holes and the occurrence of bulging along the edge portion of a positive electrode mixed material layer can be suppressed upon forming the positive electrode. Furthermore, by using this slurry composition, the peel strength of the positive electrode mixed material layer can be improved.

In this slurry composition for a positive electrode of a lithium ion secondary battery, the amount of the sulfosuccinic acid ester or a salt thereof is preferably 10 parts by mass or greater to 200 parts by mass or less per 100 parts by mass of solid content of the water-soluble polymer that contains a monomer unit containing an acid group. By controlling the content of the sulfosuccinic acid ester or the salt thereof in the slurry composition to be in this predetermined range, generation of pin holes can be suppressed while sufficiently suppressing degradation in electrical characteristics of the lithium ion secondary battery that includes the positive electrode formed with the slurry composition.

In this slurry composition for a positive electrode of a lithium ion secondary battery, the amount of the sulfosuccinic acid ester or a salt thereof is preferably 0.1 parts by mass or greater to 10 parts by mass or less per 100 parts by mass of a total of solid content of the particulate binder and solid content of the water-soluble polymer that contains the monomer unit containing an acid group. By controlling the content of the sulfosuccinic acid ester or the salt thereof in the slurry composition to be in this predetermined range, generation of pin holes can be further suppressed while further suppressing degradation in electrical characteristics of the lithium ion secondary battery that includes the positive electrode formed with the slurry composition.

In this slurry composition for a positive electrode of a lithium ion secondary battery, the water-soluble polymer preferably contains at least one of a monomer unit containing a carboxylic acid group and a monomer unit containing a sulfonate group as the monomer unit containing an acid group. When the water-soluble polymer that contains the monomer unit containing an acid group contains at least one of a monomer unit containing a carboxylic acid group and a monomer unit containing a sulfonate group, the solubility (dispersibility) in water of the water-soluble polymer can be further increased, and the peel strength of the positive electrode mixed material layer can be improved.

In this slurry composition for a positive electrode of a lithium ion secondary battery, the water-soluble polymer that contains the monomer unit containing an acid group preferably further contains 0.1% to 30% by mass of a fluorine-containing monomer unit. Including a fluorine-containing monomer unit at this ratio both improves smoothness of the positive electrode mixed material layer and suppresses bubbling of the positive electrode mixed material layer.

In this slurry composition for a positive electrode of a lithium ion secondary battery, the mass ratio of the particulate binder to the water-soluble polymer that contains the monomer unit containing an acid group represented by (the particulate binder)/(the water-soluble polymer that contains the monomer unit containing an acid group) is preferably from 99/1 to 50/50. By setting the mass ratio of the particulate binder to the water-soluble polymer to be within such a range, the adherence of the positive electrode mixed material layer to the current collector can be increased, and the durability of the positive electrode mixed material layer can also be improved.

In order to solve the above problem advantageously, the disclosed method of producing a positive electrode for a lithium ion secondary battery includes applying any one of the above-described slurry compositions for the positive electrode of a lithium ion secondary battery onto a current collector; and drying the slurry composition for the positive

electrode of a lithium ion secondary battery applied onto the current collector to form a positive electrode mixed material layer on the current collector. Forming the positive electrode mixed material layer with the above-described slurry composition for the positive electrode of a lithium ion secondary battery yields a positive electrode for a lithium ion secondary battery that achieves suppression of both the generation of pin holes and the occurrence of bulging along the edge portion of the positive electrode mixed material layer. Furthermore, forming the positive electrode mixed material layer with the above-described slurry composition can improve the peel strength of the positive electrode mixed material layer.

Furthermore, in order to solve the above problem advantageously, the disclosed positive electrode for a lithium ion secondary battery includes a positive electrode active material, a conductive material, a water-soluble polymer, a particulate binder, and a surfactant. The water-soluble polymer contains a monomer unit containing an acid group at a ratio of 20% by mass or greater and 70% by mass or less, viscosity of a 1% by mass water solution of the water-soluble polymer is 1 mPa·s or greater to 1,000 mPa·s or less, and the surfactant includes a sulfosuccinic acid ester or a salt thereof. In a positive electrode thus including (i) a predetermined water-soluble polymer that contains a monomer unit containing an acid group and (ii) a sulfosuccinic acid ester or a salt thereof as a surfactant, both generation of pin holes and the occurrence of bulging along the edge portion of a positive electrode mixed material layer are suppressed. Furthermore, the positive electrode mixed material layer in this positive electrode has good peel strength. The use of the positive electrode for a lithium ion secondary battery described herein accordingly provides a lithium ion secondary battery having good electrical characteristics.

In order to solve the above problem advantageously, the disclosed lithium ion secondary battery includes the aforementioned positive electrode for a lithium ion secondary battery, a negative electrode, an electrolysis solution, and a separator. Accordingly, the lithium ion secondary battery that includes the aforementioned positive electrode for a lithium ion secondary battery has good electrical characteristics.

(Advantageous Effect)

This disclosure provides an aqueous slurry composition for the positive electrode of a lithium ion secondary battery that achieves suppression of both the generation of pin holes and the occurrence of bulging along the edge portion of the positive electrode mixed material layer. This disclosure also provides a method of producing a positive electrode for a lithium ion secondary battery formed with the aforementioned aqueous slurry composition.

Furthermore, this disclosure provides a positive electrode for a lithium ion secondary battery that achieves suppression of both the generation of pin holes and the occurrence of bulging along the edge portion of the positive electrode mixed material layer. This disclosure also provides a lithium ion secondary battery including the aforementioned positive electrode for a lithium ion secondary battery and having good electrical characteristics.

## DETAILED DESCRIPTION

The following describes embodiments in detail.

The disclosed slurry composition for the positive electrode of a lithium ion secondary battery is used to form the positive electrode of a lithium ion secondary battery. The disclosed method of producing a positive electrode for a lithium ion secondary battery may be used to produce a positive electrode for a lithium ion secondary battery from the slurry composition for the positive electrode of a lithium ion secondary battery, after preparing the slurry composition.

The disclosed positive electrode for a lithium ion secondary battery may be produced by the disclosed method of producing the positive electrode of a lithium ion secondary battery. The disclosed lithium ion secondary battery includes the disclosed positive electrode for a lithium ion secondary battery.

### (Slurry Composition for Positive Electrode of Lithium Ion Secondary Battery)

The disclosed slurry composition for the positive electrode of a lithium ion secondary battery is an aqueous slurry composition that has an aqueous medium as its dispersion medium and contains a positive electrode active material, a conductive material, a water-soluble polymer, a particulate binder, a surfactant, and water. In the disclosed slurry composition for the positive electrode of a lithium ion secondary battery, the water-soluble polymer contains a monomer unit containing an acid group, the viscosity of a 1% by mass water solution of the water-soluble polymer is 1 mPa·s or greater to 1,000 mPa·s or less, and a sulfosuccinic acid ester or a salt thereof is used as a surfactant.

#### <Positive Electrode Active Material>

The positive electrode active material blended in the slurry composition may be, but is not limited to, any positive electrode active material known in the art. Specific examples of the positive electrode active material include transition metal-containing compounds, such as a transition metal oxide, a transition metal sulfide, and a composite metal oxide

comprising lithium and a transition metal. Examples of the transition metal include Ti, V, Cr, Mn, Fe, Co. Ni, Cu, and Mo.

Examples of the transition metal oxide include MnO, $MnO_2$, $V_2O_5$, $V_6O_{13}$, $TiO_2$, $Cu_2V_2O_3$, amorphous $V_2O$-$P_2O_5$, amorphous $MoO_3$, amorphous $V_2O_5$, and amorphous $V_6O_{13}$.

Examples of the transition metal sulfide include $TiS_2$, $TiS_3$, amorphous $MoS_2$, and FeS.

Examples of the composite metal oxide comprising lithium and a transition metal include a lithium-containing composite metal oxide with a layered structure, a lithium-containing composite metal oxide with a spinel structure, and a lithium-containing composite metal oxide with an olivine structure.

Examples of the lithium-containing composite metal oxide with a layered structure include lithium-containing cobalt oxide ($LiCoO_2$), lithium-containing nickel oxide ($LiNiO_2$), lithium-containing composite oxide of Co-Ni-Mn, lithium-containing composite oxide of Ni-Mn-Al, lithium-containing composite oxide of Ni-Co-Al, and a solid solution comprising $LiMaO_2$ and $Li_2MbO_3$. Examples of the solid solution comprising $LiMaO_2$ and $Li_2MbO_3$ include $xLiMaO_2 \cdot (1-x)Li_2MbO_3$ and the like, where x represents a number satisfying $0 < x < 1$, Ma represents one or more kinds of transition metals with an average oxidation state of 3+, and Mb represents one or more kinds of transition metals with an average oxidation state of 4+.

The term "average oxidation state" as used herein refers to an average oxidation state of the "one or more kinds of transition metals" and is calculated from the molar quantity and the valence of the transition metal. For example, when the "one or more kinds of transition metals" is composed of 50 mol% $Ni^{2+}$ and 50 mol% $Mn^{4+}$, the average oxidation state of the "one or more kinds of transition metals" is calculated as $(0.5) \times (2+) + (0.5) \times (4+) = 3+$.

Examples of the lithium-containing composite metal oxide with a spinel structure include lithium manganate ($LiMn_2O_4$) and compounds obtained by substituting part of Mn contained in lithium manganate ($LiMn_2O_4$) with another transition metal. One specific example thereof is $Li_s[Mn_{2-t}Mc_t]O_4$, where Mc represents one or more kinds of transition metals having an average oxidation state of 4+, which may be Ni, Co, Fe, Cu, or Cr; t represents a number satisfying $0 < t < 1$; and s represents a number satisfying $0 \leq s \leq 1$. Another example of the positive electrode active material is lithium-rich spinel compounds represented by the formula $Li_{1+x}Mn_{2-x}O_4$ ($0 < X < 2$).

Examples of the lithium-containing composite metal oxide with an olivine structure include olivine-type lithium phosphate compounds represented by the formula $Li_yMdPO_4$, such as olivine-type lithium iron phosphate ($LiFePO_4$) and olivine-type manganese lithium phosphate ($LiMnPO_4$), where Md represents one or more kinds of transition metals having an average oxidation state of 3+, which may be Mn, Fe, or Co, and y represents a number satisfying $0 \leq y \leq 2$. Md of the olivine-type lithium phosphate compounds represented by the formula $Li_yMdPO_4$ may be partly substituted with another metal. Examples of the metal possibly substituting the part of Md include Cu, Mg, Zn, V, Ca, Sr, Ba, Ti, Al, Si, B, and Mo.

Of the above-described positive electrode active materials, lithium-containing cobalt oxide ($LiCoO_2$) or olivine-type iron lithium phosphate ($LiFePO_4$) is preferred to improve the cycle characteristics and initial capacity of the lithium ion secondary battery including the positive electrode formed with the slurry composition.

On the other hand, to increase the capacity of the lithium ion secondary battery that includes the positive electrode formed with the slurry composition, a positive electrode active material containing at least one of Mn and Ni is preferred. Specifically, to increase the capacity of the lithium ion secondary battery, the positive electrode active material may preferably be $LiNiO_2$, $LiMn_2O_4$, lithium-rich spinel compounds, $LiMnPO_4$, $Li[Ni_{0.5}Co_{0.2}Mn_{0.3}]O_2$, $Li[Ni_{1/3}Co_{1/3}Mn_{1/3}]O_2$, $Li[Ni_{0.17}Li_{0.2}Co_{0.07}Mn_{0.56}]O_2$, $LiNi_{0.5}Mn_{1.5}O_4$, or the like; and may more preferably be $LiNiO_2$, $Li[Ni_{0.5}Co_{0.2}Mn_{0.3}]O_2$, $Li[Ni_{0.17}Li_{0.2}Co_{0.07}Mn_{0.56}]O_2$, $LiNi_{0.5}Mn_{1.5}0_4$, or the like; and may particularly preferably be $Li[Ni_{0.17}Li_{0.2}Co_{0.07}Mn_{0.56}]O_2$, $Li[Ni_{0.5}Co_{0.2}Mn_{0.3}]O_2$, $LiNi_{0.5}Mn_{1.5}0_4$, or the like.

The aforementioned positive electrode active material containing at least one of Mn and Ni may preferably be coated with a coating material containing a coating resin that is not soluble in an aqueous medium but is swellable, without dissolving, when in contact with an electrolysis solution (organic electrolysis solution) commonly used in lithium ion secondary batteries. The positive electrode active material containing at least one of Mn and Ni contains an alkali component, such as lithium carbonate ($Li_2CO_3$) or lithium hydroxide (LiOH), which is a residue from the production process. The coating resin in the positive electrode active material coated with the aforementioned coating material, however, can suppress the elution of a corrosive material, thereby suppressing corrosion of the current collector upon formation of the positive electrode. The solubility parameter (SP) value of the coating resin having the above-described characteristics is preferably 8.0 $(cal/cm^3)^{1/2}$ or greater, and more preferably 10 $(cal/cm^{31/2}$ or greater; but is preferably 13 $(cal/cm^3)^{1/2}$ or less, and more preferably 12 $(cal/cm^3)^{1/2}$ or less. The SP value is measured in accordance with the method described in JP 2011-134807 A. When the coating resin has an SP value of 8.0 $(cal/cm^3)^{1/2}$ or greater, the coating resin sufficiently swells in the electrolysis solution, so that the lithium ions in the lithium ion secondary battery would not be prevented from migrating, which consequently achieves low internal resistance. When the coating resin has an SP value of 13 $(cal/cm^3)^{1/2}$ or less, the coating resin in the slurry composition is prevented from dissolving into the aqueous medium, thereby suppressing elution of the alkali component from the positive electrode active material. The coating material may be applied to the positive electrode active material by, for example, fluidized-bed granulation, spray granulation, coagulant precipitation, or pH precipitation.

The blending amount or particle size of the positive electrode active material used herein may be, but is not limited to, the same amount or particle size as the positive electrode active material conventionally used.

<Conductive Material>

The conductive material ensures electrical contact between the positive electrode active materials. The conductive material may be, but is not limited to, any conductive material known in the art. Specific examples of the conductive material include conductive carbon materials, such as acetylene black, Ketjen black®, carbon black, and graphite; fibers of various metals; and foil. Of these materials, acetylene black, Ketjen black®, carbon black, or graphite may preferably be used to improve the electrical contact between the positive electrode active materials as well as to improve the electrical characteristics of the lithium ion secondary battery including the positive electrode formed with the slurry composition. Acetylene black is particularly preferred.

The blending amount of the conductive material is usually 0.01 to 20 parts by mass, preferably 1 to 10 parts by mass, per 100 parts by mass of the positive electrode active material. If the blending amount of the conductive material is excessively small, electrical contact between the positive electrode active materials would not be sufficiently ensured, which consequently fails to provide the lithium ion secondary battery with sufficient electrical characteristics. Conversely, if the blending amount of the conductive material is excessively large, the stability of the slurry composition as well as the density of the positive electrode mixed material layer in the positive electrode would decrease, which consequently fails to sufficiently increase the capacity of the lithium ion secondary battery.

<Water-Soluble Polymer>

The water-soluble polymer functions as a rheology modifier for suppressing the bulging along the edge portion of the positive electrode mixed material layer formed on the current collector. The water-soluble polymer that is used contains a monomer unit containing an acid group, and the viscosity of a 1% by mass water solution of the water-soluble polymer is 1 mPa·s or greater to 1,000 mPa·s or less. By blending such a water-soluble polymer into the slurry composition, the smoothness of the positive electrode mixed material layer of the positive electrode produced with the slurry composition can be improved, while also improving the adherence of the positive electrode mixed material layer to the current collector. Furthermore, good battery characteristics can be achieved in the secondary battery produced with this electrode. The phrase "containing a monomer unit" as used herein means that "a polymer obtained with a monomer contains a structural unit derived from the monomer". Stating that the polymer is water soluble means that when 0.5 g of the polymer are dissolved in 100 g of water at 25°C, less than 0.5% by mass is insoluble.

One kind of water-soluble polymer may be used alone, or two or more kinds may be used in combination at any ratio.

Furthermore, "viscosity of a 1% by mass water solution" refers to the value measured by preparing a 1% by mass water solution of the water-soluble polymer and measuring the viscosity at pH 8 with a Brookfield viscometer at 25°C and 60 rpm.

While the reason why blending the water-soluble polymer with the above-described properties yields the aforementioned excellent effects is not clear, the following reasons may be inferred based on examination.

Namely, among the components included in a positive electrode for a secondary battery, the positive electrode active material is typically hydrophilic, yet the conductive material is typically hydrophobic. Therefore, in a slurry composition including a positive electrode active material and a conductive material, it is difficult to disperse both the positive electrode active material and the conductive material well. Using the water-soluble polymer that contains a monomer unit containing an acid group, however, achieves good dispersion of both the positive electrode active material and the conductive material. As a result, the slurry composition can be applied onto the current collector while suppressing aggregation of the positive electrode active material and of the conductive material, thereby improving the smoothness and improving the adherence of the positive electrode mixed material layer to the current collector.

Furthermore, since the water-soluble polymer contains the monomer unit containing an acid group, electrostatic interaction via the acid group allows adjustment of the rheology of the slurry. The bulging along the edge portion of the positive electrode mixed material layer can thus be suppressed, thereby improving the smoothness of the positive electrode mixed material layer.

Furthermore, the viscosity of a 1% by mass water solution of the water-soluble polymer is 1 mPa·s or greater to 1,000 mPa·s or less, preferably 2 mPa·s or greater, more preferably 5 mPa·s or greater, even more preferably 50 mPa·s or greater, and particularly preferably 65 mPa·s or greater; but is preferably 500 mPa·s or less, more preferably 100 mPa·s or less, and particularly preferably 85 mPa·s or less. If the viscosity is in this range, the water-soluble polymer can be dispersed uniformly in the slurry composition, and prevalence and aggregations of the positive electrode active material, conductive material, and particulate binder in the slurry composition can be suppressed. This reduces the occurrence of sites where the particulate binder is locally scarce in the positive electrode mixed material layer, thereby

preventing the adhesion strength of the positive electrode mixed material layer with respect to the current collector from becoming locally strong or weak. This also prevents the viscosity of the slurry composition from becoming excessively high, which would make it difficult for bubbles forming in the slurry composition to escape. The generation of pin holes can thus be suppressed.

By dispersing the positive electrode active material and the conductive material well in the positive electrode mixed material layer, the constituent elements in the positive electrode mixed material layer are prevented from partially prevailing, thus yielding a more uniform structure for the positive electrode mixed material layer. Therefore, the distribution of pores formed in the positive electrode mixed material layer becomes uniform and the electrolysis solution can penetrate more easily, thus improving the injectability.

The uniformity in the composition of the positive electrode mixed material layer also improves, thereby reducing the internal resistance of the positive electrode.

A synergistic effect between the above-described effects allows improvement of storage characteristics, in a high-temperature environment, of the secondary battery that uses the positive electrode formed with the disclosed slurry composition. By the same mechanism, the cycle characteristics and output characteristics of the secondary battery can also be improved.

The viscosity of a 1% by mass water solution of the water-soluble polymer can be adjusted by controlling the type of below-described monomer unit, the magnitude of the weight-average molecular weight of the water-soluble polymer, or the like.

The monomer units that can be contained in the water-soluble polymer used in the disclosed slurry composition are described next. The content ratio of each monomer unit in the water-soluble polymer normally matches the ratio of the included monomer containing an acid group as used when producing the water-soluble polymer.

[Monomer Unit Containing an Acid Group]

A monomer unit containing an acid group refers to a structural unit that is obtained by polymerizing a monomer that contains an acid group. Examples of the acid group include a carboxylic acid group (-COOH), sulfonate group ($-SO_3H$), and phosphate group ($-PO_3H_2$). The water-soluble polymer preferably contains at least one of a monomer unit containing a carboxylic acid group and a monomer unit containing a sulfonate group. One kind of acid group may be used alone, or two or more kinds may be used in combination as the acid group of the monomer unit containing an acid group. The number of acid groups in the monomer containing an acid group need not be one and may instead be two or more.

Examples of the monomer containing a carboxylic acid group include unsaturated monocarboxylic acid and derivatives thereof; and unsaturated dicarboxylic acid, its acid anhydride, and their derivatives. Specific examples include acrylic acid, methacrylic acid, and itaconic acid.

Examples of the monomer containing the sulfonate group include styrene sulfonic acid, (meth)acrylic acid-2-ethyl sulfonate, 2-acrylamide-2-methyl propane sulfonic acid, and 3-allyloxy-2-hydroxypropane sulfonic acid.

The term "(meth)acryl" as used herein means acryl and/or methacryl, and the term "(meth)acrylic acid" means acrylic acid and/or methacrylic acid.

Examples of the monomer containing the phosphate group include 2-((meth)acryloyloxy)ethyl phosphate, methyl-2-(meth)acryloyloxyethyl phosphate, and ethyl-(meth)acryloyloxyethyl phosphate.

The term "(meth)acryloyloxy" as used herein means acryloyloxy and/or methacryloyloxy.

One kind of the above-described monomer containing an acid group may be used alone, or two or more kinds may be used in combination at any ratio.

Among these, acrylic acid, methacrylic acid, 2-acrylamide-2-methyl propane sulfonic acid, and 3-allyloxy-2-hydroxypropane sulfonic acid are preferable. The reason is that the solubility (dispersibility) in water of the water-soluble polymer can be further increased, and the peel strength of the positive electrode mixed material layer can be improved.

The ratio of the monomer unit containing an acid group in the water-soluble polymer is 20% by mass or greater, preferably 25% by mass or greater, and more preferably 30% by mass or greater; but is 70% by mass or less, preferably 65% by mass or less, and more preferably 60% by mass or less. Setting the ratio of the monomer unit containing an acid group to be at least the lower limit of the aforementioned range both sufficiently increases the peel strength of the positive electrode mixed material layer and suppresses bulging along the edge portion of the positive electrode active material layer. On the other hand, setting the ratio of the monomer unit containing an acid group to be at most the upper limit of the aforementioned range prevents the adsorption of the water-soluble polymer with respect to the positive electrode active material from becoming excessively high and prevents the positive electrode active material from producing a pseudo cross-linking structure, thereby suppressing aggregations of the positive electrode active material via the water-soluble polymer and suppressing the generation of pin holes. When a combination of two or more kinds of monomers containing an acid group is used, the aforementioned ratio of the monomer unit containing an acid group in the water-soluble polymer is the ratio of the total amount of the monomers.

[Fluorine-Containing Monomer Unit]

The water-soluble polymer used in the disclosed slurry composition preferably includes a fluorine-containing monomer unit. By including a fluorine-containing monomer unit, the surface energy of the slurry composition can be reduced, and the smoothness of the positive electrode mixed material layer can be improved. The dampness of the water-soluble polymer with respect to the electrolysis solution can also be adjusted, allowing both suppression of the swelling property of the positive electrode mixed material layer and improvement in injectability. As used here, a fluorine-containing monomer unit refers to a structural unit that is obtained by polymerizing a fluorine-containing monomer.

Examples of the fluorine-containing monomer include fluorine-containing (meth)acrylic acid ester monomers represented by Formula (I) below.

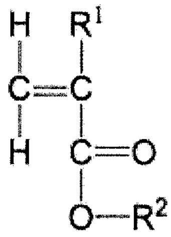

(I)

In Formula (1), $R^1$ represents a hydrogen atom or a methyl group.

In Formula (I), $R^2$ represents a hydrocarbon group containing a fluorine atom. The carbon number of the hydrocarbon group is normally 1 or more to normally 18 or less. The number of fluorine atoms contained in $R^2$ may be 1, or the number may be 2 or more.

Examples of the fluorine-containing (meth)acrylic acid ester monomer represented by Formula (1) include (meth)acrylic acid alkyl fluoride ester, (meth)acrylic acid aryl fluoride ester, and (meth)acrylic acid aralkyl fluoride ester. Among these, (meth)acrylic acid alkyl fluoride ester is preferable.

Examples of such monomers include (meth)acrylic acid 2,2,2-trifluoroethyl ester, (meth)acrylic acid (perfluorooctyl)ethyl ester, (meth)acrylic acid 2,2,3,3-tetrafluoropropyl ester, (meth)acrylic acid 2,2,3,4,4.4-hexafluorobutyl ester, (meth)acrylic acid 1H,1H,9H-perfluoro-1-nonyl ester, (meth)acrylic acid 1H,1H,11H-perfluoroundecyl ester, (meth)acrylic acid 3(4{1-trifluoromethyl-2,2-bis[bis(trifluoromethyl)fluoromethyl]ethynyloxy}b enzooxy)2-hydroxypropyl ester, (meth) acrylic acid perfluorooctyl ester, (meth)acrylic acid trifluoromethyl ester, and (meth)acrylic acid perfluoroethyl ester. Among these, in terms of copolymerizability, (meth)acrylic acid 2,2,2-trifluoroethyl ester, (meth)acrylic acid 2,2,3,3-tetrafluoropropyl ester, and (meth)acrylic acid 2,2,3,4,4,4-hexafluorobutyl ester are preferable. These monomers are also preferable in that they allow a reduction in costs when producing the slurry composition.

One kind of fluorine-containing monomer and fluorine-containing monomer unit may be used alone, or two or more kinds may be used in combination at any ratio.

The ratio of the fluorine-containing monomer unit in the water-soluble polymer is preferably 0.1% by mass or greater, more preferably 0.2% by mass or greater, and particularly preferably 0.5% by mass or greater; but is preferably 30% by mass or less, more preferably 20% by mass or less, and particularly preferably 15% by mass or less. Setting the ratio of the fluorine-containing monomer unit to be at least the lower limit of the aforementioned range improves the smoothness of the positive electrode mixed material layer and also provides the water-soluble polymer with repulsion with respect to the electrolysis solution, thereby keeping the swelling property in an appropriate range. On the other hand, setting the ratio of the fluorine-containing monomer unit to be at most the upper limit of the aforementioned range suppresses an increase in bubbling due to a reduction in the surface energy of the slurry composition and suppresses the generation of pin holes in the positive electrode mixed material layer while also providing the water-soluble polymer with dampness with respect to the electrolysis solution and improving the low-temperature output characteristics of the secondary battery.

[(Meth)Acrylic Acid Ester Monomer Unit]

The water-soluble polymer used in the disclosed slurry composition may include a (meth)acrylic acid ester monomer unit. A (meth)acrylic acid ester monomer unit refers to a structural unit that is obtained by polymerizing a (meth)acrylic acid ester monomer.

A (meth)acrylic acid ester monomer is a compound represented by $CH_2=CR^3-COOR^4$ (where $R^3$ represents a hydrogen atom or a methyl group and $R^4$ represents an alkyl group or a cycloalkyl group).

Examples of the (meth)acrylic acid ester monomer include methyl acrylate, ethyl acrylate, n-propyl acrylate,

isopropyl acrylate, n-butyl acrylate, t-butyl acrylate, pentyl acrylate, hexyl acrylate, heptyl acrylate, octyl acrylate, 2-ethylhexyl acrylate, nonyl acrylate, decyl acrylate, lauryl acrylate, n-tetradecyl acrylate, stearyl acrylate, or other acrylic acid alkyl ester; and methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, stearyl methacrylate, or other methacrylic acid alkyl esters.

One kind of (meth)acrylic acid ester monomer and (meth)acrylic acid ester monomer unit may be used alone, or two or more kinds may be used in combination at any ratio.

The ratio of the (meth)acrylic acid ester monomer in the water-soluble polymer is preferably 30% by mass or greater, more preferably 35% by mass or greater, and particularly preferably 40% by mass or greater; but is preferably 80% by mass or less and more preferably 70% by mass or less. Setting the amount of the (meth)acrylic acid ester monomer unit to be at least the lower limit of the aforementioned range increases the flexibility of the positive electrode mixed material layer, and setting the amount to be at most the upper limit of the aforementioned range improves the adherence of the positive electrode for a secondary battery.

[Cross-Linkable Monomer Unit]

The water-solubie polymer used in the disclosed slurry composition preferably includes a cross-linkable monomer unit. By including a cross-linkable monomer unit, the molecular weight of the water-soluble polymer can be increased to an extent that does not impair the water solubility of the water-soluble polymer, and the degree of swelling of the water-soluble polymer in the electrolysis solution can be prevented from becoming excessively high. As used here, a cross-linkable monomer unit refers to a structural unit that is obtained by polymerizing a cross-linkable monomer. A cross-linkable monomer refers to a monomer that can form a cross-linked structure during or after polymerization by heating or by irradiation of an energy beam. Examples of a cross-linkable monomer typically include monomers that exhibit thermal cross-linking. More specifically, examples include a monofunctional monomer having a thermal cross-linking group and one olefinic double bond per molecule, and a multifunctional monomer having two or more olefinic double bonds per molecule.

Examples of the thermal cross-linking group include an epoxy group, N-methylol amide group, oxetanyl group, oxazoline group, and combinations thereof. Among these, an epoxy group is preferable for the ease with which its cross-link and cross-link density can be adjusted.

Examples of the cross-linkable monomer having an epoxy group as the thermal cross-linking group and having an olefinic double bond include vinyl glycidyl ether, allyl glycidyl ether, butenyl glycidyl ether, o-allyl phenyl glycidyl ether, or other unsaturated glycidyl ether; butadiene monoepoxide, chloroprene monoepoxide, 4,5-epoxy-2-pentene, 3,4-epoxy-1-vinyl cyclohexene, 1,2-epoxy-5,9-cyclododecadiene, or other monoepoxide of diene or polyene; 3,4-epoxy-1-butene, 1,2-epoxy-5-hexene, 1,2-epoxy-9-decene, or other alkenyl epoxide; as well as glycidyl acrylate, glycidyl methacrylate, glycidyl crotonate, glycidyl-4-heptenoate, glycidyl sorbate, glycidyl linoleate, glycidyl-4-methyl-3-pentenoate, glycidyl ester of 3-cyclohexenecarboxylic acid, glycidyl ester of 4-methyl-3-cyclohexenecarboxylic acid, or other glycidyl ester of unsaturated monocarboxylic acid.

Examples of the cross-linkable monomer having an N-methylol amide group as the thermal cross-linking group and having an olefinic double bond include (meth)acrylamides having a methylol group such as N-methylol(meth)acrylamide.

Examples of the cross-linkable monomer having an oxetanyl group as the thermal cross-linking group and having an olefinic double bond include 3-((meth)acryloyloxymethyl)oxetane, 3-((meth)acryloyloxymethyl)-2-trifluoromethyloxetane, 3-((meth)acryloyloxymethyl)-2-phenyloxetane, 2-((meth)acryloyloxymethyl)oxetane, and 2-((meth)acryloyloxymethyl)-4-trifluoromethyloxetane.

Examples of the cross-linkable monomer having an oxazoline group as the thermal cross-linking group and having an olefinic double bond include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropeny1-5-methy1-2-oxazoline, and 2-isopropenyl-5-ethyl-2-oxazoline.

Examples of the cross-linkable monomer having two or more olefinic double bonds per molecule include allyl(meth)acrylate, ethylene di(meth)acrylate, diethylene glycol di(meth)acrylate, triethylene glycol di(meth)acrylate, tetraethylene glycol di(meth)acrylate, trimethylolpropane-tri(meth)acrylate, dipropylene glycol diallyl ether, polyglycol diallyl ether, triethylene glycol divinylether, hydroquinone diallyl ether, tetraallyloxyethane, trimethylolpropane-diallyl ether, an allyl or vinyl ether of a multifunctional alcohol other than those listed above, triallylamine, methylene bisacrylamide, and divinyl benzene.

Among these examples, ethylene glycol dimethacrylate, allyl glycidyl ether, and allyl methacrylate are particularly preferable as the cross-linkable monomer.

One kind of cross-linkable monomer and cross-linkable monomer unit may be used alone, or two or more kinds

may be used in combination at any ratio.

The ratio of the cross-linkable monomer unit in the water-soluble polymer is preferably 0.1 % by mass or greater, more preferably 0.2% by mass or greater, and particularly preferably 0.5% by mass or greater; but is preferably 2% by mass or less, more preferably 1.5% by mass or less, and particularly preferably 1% by mass or less. Setting the ratio of the cross-iinkable monomer unit to be at least the lower limit of the aforementioned range increases the molecular weight of the water-soluble polymer, suppresses swelling of the water-soluble polymer due to the electrolysis solution, and suppresses swelling of the positive electrode for a secondary battery. On the other hand, setting the ratio of the cross-linkable monomer unit to be at most the upper limit of the aforementioned range increases the solubility of the water-soluble polymer with respect to water, thus achieving good dispersibility. Accordingly, by setting the ratio of the cross-linkable monomer unit to be within the aforementioned range, both a good degree of swelling and good dispersibility can be obtained.

[Reactive Surfactant Unit]

The water-soluble polymer used in the disclosed slurry composition preferably includes a reactive surfactant unit. Including a reactive surfactant unit improves the solubility of the water-soluble polymer in water and improves the dispersibility of the slurry composition. As used here, a reactive surfactant unit refers to a structural unit that is obtained by polymerizing a reactive surfactant monomer. The reactive surfactant monomer represents a monomer containing a polymerizable group that can copolymerize with another monomer and containing a surfactant group (i.e. hydrophilic group and hydrophobic group). The reactive surfactant unit that is obtained by polymerizing a reactive surfactant monomer constitutes a portion of a water-soluble polymer molecule and can function as a surfactant.

Normally, a reactive surfactant monomer contains a polymerizable unsaturated group, and after polymerization, this polymerizable unsaturated group also functions as a hydrophobic group. Examples of the polymerizable unsaturated group include a vinyl group, an allyl group, a vinylidene group, a propenyl group, an isopropenyl group, and an isobutylidene group. One kind of such a polymerizable unsaturated group may be used, or two or more kinds may be used.

The reactive surfactant monomer normally contains a hydrophilic group as a portion that expresses hydrophilicity. Depending on the type of hydrophilic group, reactive surfactant monomers are classified into anionic, cationic, and non-ionic surfactants.

Examples of preferable reactive surfactant monomers include compounds represented by Formula (II) below.

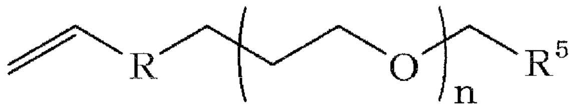

(II)

In Formula (II), R represents a divalent linking group. Examples of R include a -Si-O-group, methylene group, and phenylene group. Furthermore, in Formula (II), $R^5$ represents a hydrophilic group. Examples of $R^5$ include $-SO_3NH_4$. In Formula (II), n represents an integer from 1 to 100. The compound represented by Formula (II) may be any compound, such as polyoxyalkylene alkenyl ether ammonium sulfate. One kind of the reactive surfactant monomer may be used alone, or two or more kinds may be used in combination at any ratio.

The ratio of the reactive surfactant unit in the water-soluble polymer is preferably 0.1% by mass or greater, more preferably 0.2% by mass or greater, and particularly preferably 0.5% by mass or greater; but is preferably 15% by mass or less, more preferably 10% by mass or less, and particularly preferably 5% by mass or less. Setting the ratio of the reactive surfactant unit to be at least the lower limit of the aforementioned range improves the dispersibility of the slurry composition, thus yielding a uniform electrode. As a result, the bulging along the edge portion of the positive electrode active material layer can be sufficiently suppressed. Conversely, setting the ratio of the reactive surfactant unit to be at most the upper limit of the aforementioned range keeps the amount of water in the electrode plates low, thereby improving the durability of the positive electrode.

The water-soluble polymer used in the disclosed slurry composition may include any optional structural unit other than the various monomer units listed above, as long as the effects of this disclosure are not significantly impaired.

Examples of optional structural units include structural units obtained by polymerizing the optional monomers listed below. Examples of optional monomers include styrene, chlorostyrene, vinyltoluene, t-butylstyrene, vinylbenzoic acid methyl ester, vinyl naphthalene, chloromethylstyrene, hydroxymethylstyrene, $\alpha$-methylstyrene, divinyl benzene, or other styrene-based monomer; acrylamide or other amide-based monomer; acrylonitrile, methacrylonitrile, or other $\alpha,\beta$-unsaturated nitrile compound monomer; ethylene, propylene, or other olefin-type monomer; vinyl chloride, vinylidene

chloride, or other halogen atom-containing monomer; vinyl acetate, vinyl propionate, vinyl butyrate, vinyl benzoate, or other vinylester-type monomer; methyl vinyl ether, ethyl vinyl ether, butyl vinyl ether, or other vinylether-type monomer; methyl vinyl ketone, ethyl vinyl ketone, butyl vinyl ketone, hexyl vinyl ketone, isopropenyl vinyl ketone, or other vinyl ketone-type monomer; and N-vinylpyrrolidone, vinylpyridine, vinylimidazole, or other heterocycle-containing vinyl compound monomer. One kind of these monomers may be used alone, or two or more kinds may be used in combination at any ratio.

The ratio of the optional structural unit in the water-soluble polymer is preferably 0% by mass to 10% by mass and more preferably 0% by mass to 5% by mass.

(Physical Properties of Water-Soluble Polymer)

In addition to the viscosity of a 1% by mass water solution, the water-soluble polymer also preferably has the following properties.

The weight-average molecular weight of the water-soluble polymer is less than that of the polymer forming the below-described particulate binder and is preferably 500 or greater, more preferably 700 or greater, and particularly preferably 1,000 or greater; but is preferably 500,000 or less, more preferably 450,000 or less, and particularly preferably 400,000 or less. Setting the weight-average molecular weight of the water-soluble polymer to be at least the lower limit of the aforementioned range increases the strength of the water-soluble polymer and allows formation of a stable protective layer covering the positive electrode active material. Therefore, for example the dispersibility of the positive electrode active material and the high-temperature storage characteristics of the secondary battery can be improved. Conversely, setting the weight-average molecular weight to be at least the lower limit of the aforementioned range prevents the viscosity of the slurry composition from becoming excessively high, which would make it difficult for bubbles forming in the slurry composition to escape. The generation of pin holes can thus be suppressed, and the water-soluble polymer can be softened. Therefore, for example swelling of the positive electrode can be suppressed, and adherence of the positive electrode mixed material layer to the current collector can be improved.

The weight-average molecular weight of the water-soluble polymer can be calculated by GPC as the value in terms of polyethylene oxide, with a solution in which 0.85 g/ml of sodium nitrate are dissolved in a 10% by volume aqueous solution of acetonitrile as the developing solvent.

The glass-transition temperature of the water-soluble polymer is preferably 0°C or higher and more preferably 5°C or higher, but is preferably 100°C or lower and more preferably 50°C or lower. Setting the glass-transition temperature of the water-soluble polymer to be within the aforementioned range allows a combination of close adherence and flexibility of the positive electrode. The glass-transition temperature of the water-soluble polymer may be adjusted by combining a variety of monomers.

The ion conductivity of the water-soluble polymer is preferably $1 \times 10^{-5}$ S/cm or greater, more preferably $2 \times 10^{-5}$ S/cm or greater, and particularly preferably $5 \times 10^{-5}$ S/cm or greater; but is preferably $1 \times 10^{-3}$ S/cm or less, more preferably $1 \times 10^{-3}$ S/cm or less, and particularly preferably $1 \times 10^{-3}$ S/cm or less. Setting the ion conductivity of the water-soluble polymer to be at least the lower limit of the aforementioned range improves the low-temperature output characteristics of the secondary battery. Setting the ion conductivity to be at most the upper limit of the aforementioned range improves the adherence of the positive electrode mixed material layer to the current collector, thereby improving the durability of the positive electrode.

As used here, the "ion conductivity of the water-soluble polymer" refers to the ion conductivity measured under the following predetermined conditions.

A 1 cm × 1 cm square film is produced by pouring a water solution of the water-soluble polymer into a silicon container and drying for 72 hours at room temperature so that the thickness after drying is 1 mm. This film is then immersed for 72 hours at 60°C in a 1.0 mol/L $LiPF_6$ solution (solvent: mixture at 1/2 volume ratio of ethylene carbonate / diethyl carbonate). The thickness d of the film after immersion is measured. Subsequently, the film is sandwiched between two sheets of copper foil, the resistance R is measured from the AC impedance at 0.001 Hz to 1,000,000 Hz, and the ion conductivity = $R \times 1/d$ is calculated. This value is taken as the "ion conductivity of the water-soluble polymer".

<Method of Preparing Water-Soluble Polymer>

The water-soluble polymer for example may be prepared by polymerizing, in an aqueous solvent, a monomer composition that includes a monomer containing an acid group and, as necessary, includes a fluorine-containing monomer, a (meth)acrylic acid ester monomer, a cross-linkable monomer, a reactive surfactant monomer, and an optional monomer. At this time, the ratio of each monomer in the monomer composition normally matches the ratio of each structural unit in the water-soluble polymer.

The aqueous solvent may be an aqueous solvent known in the art, such as those listed in JP 2011-204573 A. Among these, water is preferable.

Any polymerization method may be used, such as solution polymerization, suspension polymerization, bulk polymerization, or emulsion polymerization. Furthermore, as the polymerization method, any of ionic polymerization, radical polymerization, living radical polymerization, or the like may also be used.

The polymerization temperature and polymerization time may be selected freely in accordance with the type of polymerization method and polymerization initiator. Normally, the polymerization temperature is approximately 30°C or higher, and the polymerization time is approximately 0.5 hours to 30 hours.

An additive such as an amine may be used as a polymerization auxiliary agent.

Normally, a reaction liquid in which the water-soluble polymer is dissolved in an aqueous solvent is thus obtained. The resulting reaction liquid is normally acidic, and the water-soluble polymer is often dispersed in the aqueous solvent. The water-soluble polymer thus dispersed in the aqueous solvent is normally made soluble in the aqueous solvent by adjusting the pH of the reaction liquid to be, for example, from 7 to 13. The water-soluble polymer may be extracted from the reaction liquid thus obtained. Normally, however, water is used as the aqueous medium, and the water-soluble polymer dissolved in this water is used to produce the slurry composition for a positive electrode. This slurry composition is then used to produce a positive electrode.

Examples of the method of alkalizing to the aforementioned pH of 7 to 13 include mixing the reaction liquid with a lithium hydroxide water solution, sodium hydroxide water solution, potassium hydroxide water solution, or other such alkali metal water solution; a calcium hydroxide water solution, magnesium hydroxide water solution, or other such alkaline-earth metal water solution; or an ammonia water solution or other such alkali water solution. One kind of alkali water solution may be used alone, or two or more kinds may be used in combination at any ratio.

<Particulate Binder>

In a positive electrode produced by forming a positive electrode mixed material layer on a current collector using the disclosed slurry composition, the particulate binder is a component that can hold the components included in the positive electrode mixed material layer to prevent separation of these components from the positive electrode mixed material layer. When immersed in an electrolysis solution, the particulate binder in the positive electrode mixed material layer generally maintains a granular shape, while absorbing the electrolysis solution and swelling so as to bind the positive electrode active materials and prevent the positive electrode active material from coming off the current collector.

The particulate binder used in the disclosed slurry composition comprises a polymer dispersible into an aqueous medium such as water. Such a polymer is hereinafter referred to as "particulate polymer". One kind of the particulate polymer may be used alone, or two or more kinds may be used in combination. The particulate polymer is a non-water-soluble polymer. As used here, "non-water-soluble" means that when 0.5 g of the polymer are dissolved in 100 g of water at 25°C, 90% by mass or greater is insoluble.

Examples of a preferred particulate polymer include a diene polymer, an acrylic polymer, a fluoropolymer, and a silicone polymer. Of these polymers, the acrylic polymer is preferred for its superior oxidation resistance.

The acrylic polymer used as the particulate polymer is dispersible in water, and contains (meth)acrylic acid ester monomer units. Of the acrylic polymers containing the (meth)acrylic acid ester monomer units, an acrylic polymer further containing at least one of an $\alpha,\beta$-unsaturated nitrile monomer unit and a monomer unit containing an acid group is preferred, and an acrylic polymer further containing both an $\alpha,\beta$-unsaturated nitrile monomer unit and a monomer unit containing an acid group is more preferred. The acrylic polymer containing the above monomer units further improves the strength and binding capacity of the particulate binder.

Examples of the (meth)acrylic acid ester monomer that can be used to produce the acrylic polymer include acrylic acid alkyl esters, such as methyl acrylate, ethyl acrylate, n-propyl acrylate, isopropyl acrylate, n-butyl acrylate, t-butyl acrylate, pentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and methacrylic acid alkyl esters, such as methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate. Of these, monomers having an alkyl group, which bonds with noncarbonylic oxygen atoms, with carbon number of 4 or greater are preferred. Specifically, n-butyl acrylate and 2-ethylhexyl acrylate are particularly preferred. This is because, when used in a positive electrode of a lithium ion secondary battery, the polymer obtained with those monomers moderately swells in the electrolysis solution, without being eluted into the electrolysis solution, to exhibit good ion conductivity and extend the battery life. These monomers may be used alone or in combination of at least two thereof.

The content percentage of the (meth)acrylic acid ester monomer unit contained in the acrylic polymer used as the particulate polymer is preferably 50% by mass or greater and more preferably 60% by mass or greater; but preferably 95% by mass or less and more preferably 90% by mass or less. By setting the content percentage of the monomer unit derived from (meth)acrylic acid ester monomer to 50% by mass or greater, flexibility of the particulate polymer can be increased, which makes the positive electrode obtained with the slurry composition less breakable. By setting the content

percentage of the monomer unit derived from (meth)acrylic acid ester monomer to 95% by mass or less, the mechanical strength and binding capacity of the particulate polymer can be improved, and the degree of swelling of the particulate polymer in electrolysis solution can be set to an appropriate value to yield good battery characteristics.

To improve mechanical strength and binding capacity, the α,β-unsaturated nitrile monomer may preferably be acrylonitrile or methacrylonitrile. Acrylonitrile is particularly preferred. One kind of these may be used alone, or two or more kinds may be used in combination.

The content percentage of the α,β-unsaturated nitrile monomer unit in the acrylic polymer used as the particulate polymer is preferably 3% by mass or greater and more preferably 5% by mass or greater; but preferably 40% by mass or less and more preferably 30% by mass or less. By setting the content percentage of the α,β-unsaturated nitrile monomer unit to 3% by mass or greater, mechanical strength of the particulate polymer can be improved to increase the adherence between the positive electrode active material and the current collector and between the positive electrode active materials. By setting the content percentage of the α,β-unsaturated nitrile monomer unit to 40% by mass or less, flexibility of the particulate polymer can be increased, which makes the positive electrode obtained with the slurry composition less breakable.

Examples of the monomer containing an acid group that can be used to produce the acrylic polymer include a monomer having a carboxylic acid group, a monomer having a sulfonate group, and a monomer having a phosphate group.

Examples of the monomers having a carboxylic acid group include monocarboxylic acid and derivatives thereof, dicarboxylic acid, its acid anhydride, and their derivatives.

Examples of the monocarboxylic acid include acrylic acid, methacrylic acid, and crotonic acid.

Examples of the derivatives of the monocarboxylic acid include 2-ethyl acrylic acid, isocrotonic acid, α-acetoxy acrylic acid, β-trans-aryloxy acrylic acid, α-chloro-β-E-methoxy acrylic acid, and β-diamino acrylic acid.

Examples of dicarboxylic acid include maleic acid, fumaric acid, and itaconic acid.

Examples of acid anhydride of dicarboxylic acid include maleic anhydride, acrylic acid anhydride, methyl maleic anhydride, and dimethyl maleic anhydride.

Examples of the derivatives of dicarboxylic acid include methylallyl maleic acid, such as methyl maleic acid, dimethyl maleic acid, phenyl maleic acid, chloro-maleic acid, dichloro-maleic acid, and fluoromaleic acid; and maleic acid esters, such as diphenyl maleate, nonyl maleate, decyl maleate, dodecyl maleate, octadecyl maleate, and fluoroalkyl maleate.

Examples of the monomer having the sulfonate group include vinyl sulfonic acid, methyl vinyl sulfonic acid, (meth)allyl sulfonic acid, styrene sulfonic acid, (meth)acrylic acid-2-ethyl sulfonate, 2-acrylamide-2-methyl propane sulfonic acid, and 3-allyloxy-2-hydroxypropane sulfonic acid.

The term "(meth)allyl" as used herein means allyl and/or methallyl.

Examples of the monomer having the phosphate group include 2-((meth)acryloyloxy)ethyl phosphate, methyl-2-(meth)acryloyloxyethyl phosphate, and ethyl-(meth)acryloyloxyethyl phosphate.

Of these monomers containing an acid group, acrylic acid, methacrylic acid, itaconic acid, 2-acrylamide-2-methylpropanesulfonic acid (AMPS), and 2-((meth)acryloyloxy)ethyl phosphate are preferred. Acrylic acid, methacrylic acid, and itaconic acid are preferred to improve the preservation stability of the acrylic polymer. Itaconic acid is particularly preferred in this regard. One kind of these may be used alone, or two or more kinds may be used in combination.

The content percentage of the monomer unit containing an acid group in the acrylic polymer used as the particulate polymer is preferably 0.5% by mass or greater, more preferably 1% by mass or greater, and particularly preferably 1.5% by mass or greater; but preferably 8% by mass or less, more preferably 5% by mass or less, and particularly preferably 4% by mass or less. By setting the content percentage of the monomer unit containing an acid group to 0.5% by mass or greater, the binding capacity of the particulate polymer can be increased to improve the cycle characteristics of the lithium ion secondary battery. By setting the content percentage of the monomer unit containing an acid group to 8% by mass or less, good production stability and preservation stability of the acrylic polymer can be obtained.

The acrylic polymer may contain a cross-linkable monomer unit in addition to the above-described monomer units.

Examples of the cross-linkable monomer include an epoxy group-containing monomer, a monomer containing a carbon-carbon double bond and an epoxy group, a monomer containing a halogen atom and an epoxy group, N-methylol amide group-containing monomer, oxetanyl group-containing monomer, oxazoline group-containing monomer, and a multifunctional monomer having two or more olefinic double bonds. Specifically, the cross-linkable monomer used to form the above-described water-soluble polymer may be used.

The content percentage of the cross-linkable monomer unit in the acrylic polymer used as the particulate polymer is preferably 0.01% by mass or greater and more preferably 0.05% by mass or greater; but preferably 0.5% by mass or less and more preferably 0.3% by mass or less. By setting the content percentage of the cross-linkable monomer unit to fall within the above range, the acrylic polymer can exhibit a moderate swelling property in the electrolysis solution, so that the rate characteristics and cycle characteristics of the lithium ion secondary battery including the positive

electrode obtained with the slurry composition can be improved.

The acrylic polymer used as the particulate polymer may further contain a monomer unit derived from monomers other than the above-described monomers. Examples of such a monomer unit include a polymer unit derived from a vinyl monomer and a hydroxy group-containing monomer unit.

Examples of the vinyl monomer include halogen atom-containing monomers, such as vinyl chloride and vinylidene chloride; vinyl esters, such as vinyl acetate, vinyl propionate, and vinyl butyrate; vinyl ethers, such as methyl vinyl ether, ethyl vinyl ether, and butyl vinyl ether; vinyl ketones, such as methyl vinyl ketone, ethyl vinyl ketone, butyl vinyl ketone, hexyl vinyl ketone, and isopropenyl vinyl ketone; and heterocycle-containing vinyl compounds, such as N-vinylpyrrolidone, vinylpyridine, and vinylimidazole.

Examples of the hydroxy group-containing monomer include ethylenic unsaturated alcohol, such as (meth)allyl alcohol, 3-butene-1-ol, and 5-hexene-1-ol; alkanol esters of ethylenic unsaturated carboxylic acid, such as 2-hydroxyethyl-acrylate, 2-hydroxypropyl-acrylate, 2-hydroxyethyl-methacrylate, 2-hydroxypropyl-methacrylate, di-2-hydroxyethyl-maleate, di-4-hydroxybutyl maleate, and di-2-hydroxypropyl itaconate; esters of (meth)acrylic acid and polyalkylene glycol represented by the general formula $CH_2=CR^6-COO-(C_nH_{2n-1}O)_m-H$ (where m represents an integer from 2 to 9, n represents an integer from 2 to 4, and $R^6$ represents hydrogen or a methyl group); mono(meth)acrylic acid esters of dihydroxy ester of dicarboxylic acid, such as 2-hydroxyethyl-2'-(meth)acryloyl oxyphthalate and 2-hydroxyethyl-2'-(meth)acryloyl oxysuccinate; vinyl ethers, such as 2-hydroxyethyl vinyl ether and 2-hydroxypropyl vinyl ether; mono(meth)allyl ethers of alkylene glycol, such as (meth)allyl-2-hydroxyethyl ether, (meth)allyl-2-hydroxypropyl ether, (meth)allyl-3-hydroxypropyl ether, (meth)allyl-2-hydroxybutyl ether, (meth)allyl-3-hydroxybutyl ether, (meth)allyl-4-hydroxybutyl ether, and (meth)allyl-6-hydroxyhexyl ether; polyoxyalkylene glycol mono(meth)allyl ethers, such as diethylene glycol mono(meth)allyl ether and dipropylene glycol mono(meth)allyl ether; glycerin mono(meth)allyl ether; mono(meth)allyl ether of halogen or hydroxy substitution of (poly)alkylene glycol, such as (meth)allyl-2-chloro-3-hydroxypropyl ether and (meth)allyl-2-hydroxy-3-chloropropyl ether; mono(meth)allyl ether of polyhydric phenol, such as eugenol and isoeugenol, and a halogen substitution thereof; and (meth)allyl thioethers of alkylene glycol, such as (meth)allyl-2-hydroxyethyl thioether and (meth)allyl-2-hydroxypropyl thioether. Among these, acrylic acid 2-hydroxyethyl ester (2-hydroxyethyl-acrylate) is particularly preferable.

One kind of these may be used alone, or two or more kinds may be used in combination.

The particulate polymer, such as the above-described acrylic polymer, can be produced by any polymerization process, for example, by solution polymerization, suspension polymerization, bulk polymerization, or emulsion polymerization. Of these methods, emulsion polymerization that uses an emulsifier is preferred. In producing the particulate polymer by emulsion polymerization, the below-described surfactants may be used as the emulsifier used in the polymerization. Surfactants known in the art may be used as the emulsifier, and examples of such surfactants include sodium dodecyldiphenylether sulfonate. In this disclosure, a polyoxyethylene-type surfactant is preferably not used as the emulsifier, and a polyoxyethylene-type surfactant is preferably not substantially included in the disclosed slurry composition.

As a polymerization method, an addition polymerization such as an ionic polymerization, radical polymerization, living radical polymerization, or the like may be used. The polymerization initiator may be any polymerization initiator known in the art, e.g., the polymerization initiator described in JP 2012-184201 A.

The particulate polymer is usually produced in the form of dispersion liquid in which the particulate polymers are dispersed as particulates in an aqueous medium. The particulate polymer takes the form of particulate dispersed in an aqueous medium also in the slurry composition. When dispersed in an aqueous medium in the form of particulates, particles of the particulate polymer have a 50% volume average particle size of preferably 50 nm or larger, more preferably 70 nm or larger, and further preferably 90 nm or larger: but preferably 500 nm or smaller, more preferably 400 nm or smaller, and further preferably 250 nm or smaller. By setting the volume average particle size of the particles of the particulate polymer to 50 nm or larger, the stability of the slurry composition can be increased. On the other hand, by setting the volume average particle size of the particles of the particulate polymer to 500 nm or smaller, the binding capacity of the particulate polymer can be increased.

The particulate polymer is usually preserved and transported in the form of the above-described dispersion liquid. The solid content concentration of such a dispersion liquid is usually 15% by mass or greater, preferably 20% by mass or greater, and more preferably 30% by mass or greater; but usually 70% by mass or less, preferably 65% by mass or less, and more preferably 60% by mass or less. When the solid content concentration of the dispersion liquid is within the above range, good workability upon production of the slurry composition can be achieved.

The pH of the dispersion liquid containing the particulate polymer is preferably 5 or greater and more preferably 7 or greater, but preferably 13 or less and more preferably 11 or less. By setting the pH of the dispersion liquid to fall within the above range, the stability of the particulate polymer can be improved.

The glass-transition temperature (Tg) of the particulate polymer is preferably -50°C or higher, more preferably -45°C or higher, and particularly preferably -40°C or higher; but preferably 25°C or lower, more preferably 15°C or lower, and particularly preferably 5°C or lower. By setting the glass-transition temperature of the particulate polymer to fall within the above range, strength and flexibility of the positive electrode produced with the slurry composition can be

improved to achieve high output characteristics. The glass-transition temperature of the particulate polymer can be adjusted by, for example, changing the combination of monomers for building up the monomer unit.

<Blending Amount of Water-Soluble Polymer and Particulate Binder>

The total amount of the water-soluble polymer and particulate binder used in the disclosed slurry composition is, with respect to 100 parts by mass of the positive electrode active material, preferably 0.1 parts by mass or greater, and more preferably 1 part by mass or greater; but preferably 10 parts by mass or less, and more preferably 5 parts by mass or less. Setting the amount within this range reduces the diffusion resistance of Li ions in the positive electrode mixed material layer to improve the output characteristics while also improving the binding capacity between positive electrode active materials in the positive electrode mixed material layer and the capacity of the positive electrode active material to bind to the current collector to achieve good battery life and output characteristics for the secondary battery.

Furthermore, in the disclosed slurry composition, the mass ratio of the particulate binder and the water-soluble polymer represented by "(particulate binder)/(water-soluble polymer)" is preferably set within a range of 99/1 to 50/50. In greater detail, the mass ratio represented by "(particulate binder)/(water-soluble polymer)" is preferably set to be 98/2 to 60/40 and more preferably 97/3 to 70/30. By setting the mass ratio represented by "(particulate binder)/(water-soluble polymer)" to be within the above range, the adherence of the positive electrode mixed material layer to the current collector can be increased, and the durability can be improved.

<Surfactant>

The surfactant is a component that works as a dispersant that disperses the positive electrode active material, conductive material, particulate binder, and the like in the slurry composition in an intended manner.

In a slurry composition that uses a particulate polymer prepared by emulsion polymerization as the particulate binder, the surfactant may be the emulsifier used in the emulsion polymerization. In other words, the slurry composition may be prepared by mixing the particulate polymer produced by using the surfactant described below as the emulsifier, the positive electrode active material, the conductive material, the viscosity modifier, and the aqueous medium as a dispersion medium. In this manner, the slurry composition may contain the surfactant used as the emulsifier.

The disclosed slurry composition contains sulfosuccinic acid ester or a salt thereof as the surfactant. The disclosed slurry composition may contain both sulfosuccinic acid ester and a salt of sulfosuccinic acid ester as the surfactant. Surfactants known in the art other than sulfosuccinic acid ester or a salt thereof may be used in the disclosed slurry composition, and examples of such surfactants include sodium dodecyldiphenylether sulfonate. In this disclosure, a polyoxyethylene-type surfactant is preferably not used as the emulsifier, and a polyoxyethylene-type surfactant is preferably not substantially included in the disclosed slurry composition.

By thus using sulfosuccinic acid ester or a salt thereof, bubbles in the slurry composition are more easily eliminated so as to suppress the generation of numerous defects (pin holes) in the positive electrode mixed material layer caused by the bubbles, even when using the above-described water-soluble polymer. This consequently achieves production of desired positive electrodes, thereby providing a lithium ion secondary battery with good electrical characteristics (e.g. output characteristics).

In order to suppress bubbles in the slurry composition and to suppress the generation of pin holes, the disclosed slurry composition preferably does not substantially include a polyoxyethylene-type surfactant.

Examples of the sulfosuccinic acid ester or a salt thereof include dialkyl sulfosuccinic acid and salts thereof and monoalkyl sulfosuccinic acid and salts thereof. The alkyl group of the above-described dialkyl sulfosuccinic acid and monoalkyl sulfosuccinic acid may be a linear or branched alkyl group, or an alkyl group having an alicyclic structure.

Examples of the dialkyl sulfosuccinic acid and salts thereof include dioctyl sulfosuccinic acid (di-2-ethylhexyl sulfosuccinic acid), dihexyl sulfosuccinic acid, dicyclohexyl sulfosuccinic acid, ditridecyl sulfosuccinic acid, diamyl sulfosuccinic acid, diisobutyl sulfosuccinic acid, and their sodium salts.

Examples of the monoalkyl sulfosuccinic acid and salts thereof include octyl sulfosuccinic acid, cyclohexyl sulfosuccinic acid, and their sodium salts.

Of these sulfosuccinic acid esters and salts thereof, dialkyl sulfosuccinic acid and salts thereof are preferred, and sodium dioctyl sulfosuccinate and sodium diamyl sulfosuccinate are particularly preferred. This is because sodium dioctyl sulfosuccinate and sodium diamyl sulfosuccinate, which have superior biodegradability, allow the effluent produced in the preparation of the particulate polymer and the slurry composition to be treated easily.

In the disclosed slurry composition, the content of the sulfosuccinic acid ester or a salt thereof is, with respect to 100 parts by mass in terms of solid content of the water-soluble polymer that contains a monomer unit containing an acid group, preferably 10 parts by mass or greater, more preferably 20 parts by mass or greater, and even more preferably 25 parts by mass or greater; but preferably 200 parts by mass or less, more preferably 150 parts by mass or less, and even more preferably 100 parts by mass or less.

In the disclosed slurry composition, the content of the sulfosuccinic acid ester is, with respect to 100 parts by mass in terms of the total solid content of the particulate binder and of the water-soluble polymer that contains a monomer unit containing an acid group, preferably 0.1 parts by mass or greater, and more preferably 3.0 parts by mass or greater; but preferably 10 parts by mass or less, and more preferably 5.0 parts by mass or less.

Upon containing an excessively large amount of sulfosuccinic acid ester or its salt, the slurry composition may, when used in a lithium ion secondary battery, cause an increase in internal resistance of the lithium ion secondary battery and a consequent degradation in the electrical characteristics. Conversely, upon the slurry composition containing an excessively small amount of sulfosuccinic acid ester or its salt, bubbles may persist in the slurry composition, which may prevent sufficient suppression of the generation of pin holes.

<Other Components>

In addition to the above-described components, the disclosed slurry composition may further contain a viscosity modifier, for example, constituted by a compound other than the compound added as the water-soluble polymer. Any compound known in the art may be used as the viscosity modifier. Examples include cellulosic polymers such as carboxymethyl cellulose, methyl cellulose, and hydroxypropyl cellulose; ammonium salts and alkali metal salts of these cellulosic polymers; modified or unmodified polyvinyl alcohol; polyethylene glycol; polyvinyl pyrrolidone; starch oxide; starch phosphate; casein; various kinds of modified starches; and acrylonitrile-butadiene copolymer hydride. The blending amount of the viscosity modifier is usually 0.1 to 2 parts by mass, preferably 0.3 to 1 part by mass, per 100 parts by mass of the positive electrode active material. When the viscosity modifier is blended in an amount within the above range, a slurry composition with good viscosity can be obtained. This enables the intended application of the slurry composition onto the current collector in forming the positive electrode, consequently lengthening the product-service life of the resulting positive electrode and increasing the adhesion strength between the current collector and the positive electrode mixed material layer.

The disclosed slurry composition may also contain components such as a reinforcing agent, an antioxidant, or an additive for electrolysis solution having a function of suppressing decomposition of the electrolysis solution. These other components may be selected from those that are publicly known, such as those described for example in WO2012/036260 or JP 2012-204303 A.

<Preparation of Slurry Composition>

The disclosed slurry composition can be prepared by dispersing the above-described components in a dispersion medium, or specifically in an aqueous medium. Specifically, the slurry composition can be prepared by mixing the above-described components and the aqueous medium with the use of a mixer such as a ball mill, a sand mill, a bead mill, a pigment disperser, a grinding machine, an ultrasonic disperser, a homogenizer, a planetary mixer, and FILMIX.

Typically, the aqueous medium used is water; however, an aqueous solution of any compound or a mixed solution of a small amount of organic medium and water may also be used. The solid content concentration of the slurry composition may for example be 10% to 80% by mass to ensure that the components are uniformly dispersed. Mixing of the above-described components with the aqueous medium may be usually performed at a temperature ranging from room temperature to 80°C for 10 minutes to a few hours.

If the particulate polymer synthesized through emulsion polymerization is blended into the slurry composition as a particulate binder, the above-described surfactant may be used as an emulsifier, and the surfactant used as the emulsifier may be blended into the slurry composition in the form of a dispersion liquid together with the particulate polymer.

(Method of Producing Positive Electrode for Lithium Ion Secondary Battery)

The disclosed method of producing the positive electrode for a lithium ion secondary battery includes applying the above-described slurry composition for the positive electrode of a lithium ion secondary battery onto a current collector (application step) and drying the slurry composition for the positive electrode of a lithium ion secondary battery applied onto the current collector to form a positive electrode mixed material layer on the current collector (drying step).

<Application Step>

The above-described slurry composition for the positive electrode of a lithium ion secondary battery may be applied onto the current collector with any publicly known method. Specifically, the slurry composition may be applied for example by doctor blading, dip coating, reverse roll coating, direct roll coating, gravure coating, extrusion coating, or brush coating. The slurry composition may be applied onto one side or both sides of the current collector. The thickness of the slurry coating on the current collector after application yet before drying may be properly determined in accordance

with the thickness of the positive electrode mixed material layer to be obtained after drying.

The current collector to be coated with the slurry composition is made of a material having electrical conductivity and electrochemical durability. Specifically, the current collector may be made of aluminum or aluminum alloy. Aluminum and an aluminum alloy may be used in combination, or a combination of different types of aluminum alloys may be used. Aluminum and aluminum alloy are heat resistant and electrochemically stable and hence are superior materials for the current collector.

Aluminum foil is generally widely used as the current collector. However, aluminum foil, which is formed by rolling a block of aluminum, contains oil or other components on its surface that were used to allow smooth sliding in the rolling process. Therefore, the current collector made of aluminum foil usually requires removal of the oil or other components from the surface before application of a slurry composition, so as to prevent the aqueous slurry composition from being repelled by the residual oil component on the surface. However, the disclosed slurry composition contains a water-soluble polymer and hence allows uniform application of the slurry composition even onto an inexpensive aluminum foil from which oil or other components have not been removed.

<Drying Step>

The slurry composition applied on the current collector may be dried by any method publicly known, for example, drying by warm, hot, or low-humidity air; drying in a vacuum; or drying by irradiation of infrared light or electron beams. Drying the slurry composition on the current collector in this way forms a positive electrode mixed material layer on the current collector to yield a positive electrode for a lithium ion secondary battery that includes the current collector and the positive electrode mixed material layer.

After the drying step, the positive electrode mixed material layer may be further subjected to a pressing treatment, such as mold pressing or roll pressing. The pressing treatment increases the adherence between the positive electrode mixed material layer and the current collector.

(Positive Electrode for Lithium Ion Secondary Battery)

The disclosed positive electrode for a lithium ion secondary battery may be produced by using the disclosed slurry composition and employing the disclosed method of producing a positive electrode for a lithium ion secondary battery.

The disclosed positive electrode for a lithium ion secondary battery includes a current collector and a positive electrode mixed material layer formed on the current collector, and the positive electrode mixed material layer includes at least a positive electrode active material, a conductive material, a water-soluble polymer, a particulate binder, and a surfactant. The positive electrode active material, the conductive material, the water-soluble polymer, the particulate binder, and the surfactant contained in the positive electrode are those that have been included in the disclosed slurry composition. The preferred ratio of the components in the positive electrode is the same as the preferred ratio of the components in the disclosed slurry composition.

In the disclosed positive electrode for a lithium ion secondary battery, the positive electrode mixed material layer contains the water-soluble polymer and the sulfosuccinic acid ester or a salt thereof, thereby suppressing both the generation of pin holes and the occurrence of bulging along the edge portion of the positive electrode mixed material layer. The disclosed positive electrode for a lithium ion secondary battery thus provides a lithium ion secondary battery with good electrical characteristics.

(Lithium Ion Secondary Battery)

The disclosed lithium ion secondary battery includes a positive electrode, a negative electrode, an electrolysis solution, and a separator. The positive electrode is the disclosed positive electrode for a lithium ion secondary battery.

<Negative Electrode>

The negative electrode of the lithium ion secondary battery may be any negative electrode known in the art that is used as the negative electrode for a lithium ion secondary battery. Specifically, the negative electrode may for example be a thin sheet of metal lithium or an electrode having a negative electrode mixed material layer formed on a current collector.

The current collector may be made of a metal material such as iron, copper, aluminum, nickel, stainless steel, titan, tantalum, gold, and platinum. The negative electrode mixed material layer may include a negative electrode active material and a binder.

<Electrolysis Solution>

The electrolysis solution may be formed by dissolving an electrolyte in a solvent.

The solvent may be an organic solvent that can dissolve an electrolyte. Specifically, the solvent may be an alkyl carbonate solvent to which a viscosity modification solvent is added. Examples of the alkyl carbonate solvent include ethylene carbonate, propylene carbonate, and γ-butyrolactone. Examples of the viscosity modification solvent include 2,5-dimethyltetrahydrofuran, tetrahydrofuran, diethyl carbonate, ethylmethyl carbonate, dimethyl carbonate, methyl acetate, dimethoxyethane, dioxolane, methyl propionate, and methyl formate.

The electrolyte may be a lithium salt. Examples of the lithium salt that may be used include those described in JP 2012-204303 A. Of the lithium salts, $LiPF_6$, $LiClO_4$, and $CF_3SO_3Li$ are preferred as electrolytes because they readily dissolve in organic solvents and exhibit a high degree of dissociation.

<Separator>

Examples of the separator that may be used in the disclosed embodiments include those described in JP 2012-204303 A. Of these separators, a fine porous membrane made of polyolefinic (i.e., polyethylene, polypropylene, polybutene, and polyvinyl chloride) resin is preferred, because such a membrane can reduce the total thickness of the separator, which increases the ratio of the electrode active material in the secondary battery, consequently increasing the capacity per volume.

<Method of Producing Lithium Ion Secondary Battery>

The disclosed lithium ion secondary battery is produced for example by layering a positive electrode and a negative electrode by interposing a separator therebetween, rolling or folding the resulting laminate as necessary in accordance with the battery shape, placing it in a battery container, filling the battery container with an electrolysis solution, and sealing the container. To prevent pressure increase inside the lithium ion secondary battery and occurrence of overcharge/overdischarge and the like, the lithium ion secondary battery may include an overcurrent preventing device such as a fuse and a PTC device, expanded metal, and a lead plate, as necessary. The shape of the secondary battery may be a coin type, button type, sheet type, cylinder type, prism type, flat type, or the like. The resulting lithium ion secondary battery includes the positive electrode that does not suffer from generation of too many pin holes or significant bulging along the edge portion of the positive electrode active material layer, thereby achieving good electrical characteristics.

EXAMPLES

Hereinafter, the disclosed products and method will be described with reference to Examples; however, the disclosure is not limited to those demonstrated in the Examples. In the following, "%" and "parts" used in expressing quantities are by mass, unless otherwise specified.

In the following Examples and Comparative Examples, the number of defects on the electrode surface, smoothness of the positive electrode mixed material layer, peel strength, and output characteristics were evaluated with the following methods.

<Number of Defects on Electrode Surface>

A test piece of 5 cm by 10 cm was cut out from a web of the positive electrode having the positive electrode mixed material layer, before subjecting it to roll pressing. The test piece was visually inspected for the number of pin holes (defects) having a diameter of at least 0.5 mm present on the surface of the test piece and was rated based on the criteria below.

A: zero pin holes observed
B: 1-4 pin holes observed
C: 5-9 pin holes observed
D: 10 or more pin holes observed

<Smoothness of Positive Electrode Mixed Material Layer>

The web of the positive electrode having the positive electrode mixed material layer before subjection to roll pressing was measured for its layer thicknesses at 10 locations along the edge portion within 2 cm from each edge in

the width direction and also at 10 locations along the center portion within 2 cm from the center in the width direction. The layer thicknesses of the edge portion and those of the center portion were each averaged, and then an index of smoothness was calculated using the expression below and rated based on the criteria below. The smoothness index is the ratio of the absolute value of the difference between the average layer thickness of the edge portion and that of the center portion with respect to the average layer thickness of the center portion, expressed in percentage. A smaller smoothness index value represents a higher smoothness of the positive electrode mixed material layer, which means a superior coating property of the slurry composition.

$$\text{Smoothness index} = (|\text{average of layer thicknesses along the edge portion} - \text{average of layer thicknesses along the center portion}| / \text{average of layer thicknesses along the center portion}) \times 100$$

A: the smoothness index being less than 5
B: the smoothness index being 5 or greater but less than 10
C: the smoothness index being 10 or greater but less than 20
D: the smoothness index being 20 or greater

<Peel Strength>

The positive electrode having the positive electrode mixed material layer after subjection to roll pressing was cut into a rectangle with a dimension of 1.0 cm in width by 10 cm in length, yielding a test piece. A piece of adhesive cellophane tape was then attached to the surface of the test piece on the positive electrode mixed material layer side. The adhesive cellophane tape used was the tape prescribed by JIS Z 1522. The test piece was then peeled off from the cellophane tape, which is secured to a test bed, from its one end toward the other end at a rate of 50 mm/min, to measure the stress caused by the peeling. The measurement was made 10 times to calculate the average of the stress. The average, determined as the peel strength (N/m), was rated based on the criteria below. A greater peel strength means better adherence of the positive electrode mixed material layer to the current collector.

A: the peel strength being 30 N/m or greater
B: the peel strength being 10 N/m or greater but less than 30 N/m
C: the peel strength being less than 10 N/m
D: the peel strength being less than 10 N/m with failure to apply uniform pressure at roll pressing

<Output Characteristics>

The obtained lithium ion secondary battery was charged up to 4.2 V by constant-current method with a charging rate of 0.2 C under the temperature environment of 25°C and then discharged down to 3.0 V at a discharging rate of 0.2 C, to obtain the battery capacity at 0.2 C discharging. The battery was subsequently recharged up to 4.2 V by constant-current method with a charging rate of 0.2 C, and then discharged down to 3.0 V at a discharging rate of 2 C, to obtain the battery capacity at 2 C discharging. The same measurement was carried out for 10 lithium ion secondary batteries to calculate an average battery capacity for each of 0.2 C discharging and 2 C discharging. A capacity maintenance rate at 2 C discharging was then obtained by calculating the ratio of the average battery capacity $Cap_{2C}$ at 2 C discharging to the average battery capacity $Cap_{0.2C}$ at 0.2 C discharging; namely, $(Cap_{2C}/Cap_{0.2C}) \times 100\%$. Having obtained the capacity maintenance rate at 2 C discharging, output characteristics were rated based on the criteria below. A higher capacity maintenance rate at 2C discharging yields a larger discharge capacity at a high rate (2 C) discharging, which means superior output characteristics.

A: the capacity maintenance rate at 2 C discharging being 90% or higher
B: the capacity maintenance rate at 2 C discharging being 75% or higher but lower than 90%
C: the capacity maintenance rate at 2 C discharging being 60% or higher but lower than 75%
D: the capacity maintenance rate at 2 C discharging being 50% or higher but lower than 60%
E: the capacity maintenance rate at 2 C discharging being lower than 50% (caused by non-uniform application of pressure at the roll pressing, which leads to non-uniformity in density of the positive electrode mixed material layer to seriously deteriorate the output characteristics)

<Viscosity of Water-Soluble Polymer>

A 1% by mass water solution of the obtained water-soluble polymer was prepared, and with a Brookfield viscometer, the viscosity of the 1% by mass water solution was measured at 25°C and 60 rpm.

(EXAMPLE 1)

<Preparation of Water-Soluble Polymer>

The following were placed into a polymerization can, thoroughly stirred, and then heated to 60°C to begin polymerization: 32.5 parts of methacrylic acid (monomer containing an acid group), 7.5 parts of 2,2,2-trifluoroethyl methacrylate (fluorine-containing (meth)acrylic acid ester monomer), 58.2 parts of ethyl acrylate ((meth)acrylic acid ester monomer), 0.8 parts of ethylene dimethacrylate (cross-linkable monomer), 1.0 parts of polyoxyalkylene alkenyl ether ammonium sulfate as a reactive surfactant ("LATEMUL PD-104" manufactured by Kao Corporation), 0.6 parts of t-dodecyl mercaptan, 150 parts of deionized water, and 1.0 parts of potassium persulfate (polymerization initiator). When the polymer conversion rate reached 96%, the mixture was cooled to stop the reaction, yielding a mixture including the water-soluble polymer. To the mixture including the water-soluble polymer, 10% ammonia water was added to adjust to pH 8, yielding a water solution including the desired water-soluble polymer.

A portion of the resulting water solution including the water-soluble polymer was extracted and water was added to yield a 1% by mass water solution as a sample. The viscosity of this sample at pH 8 was measured as 68 mPa·s.

<Preparation of Particulate Binder>

The following were placed into a polymerization can A, heated to 70°C, and stirred for 30 minutes: 74 parts of deionized water, 0.2 parts of sodium dodecyldiphenylether sulfonate, 1.0 parts of ammonium persulfate as a polymerization initiator, and 9.7 parts of deionized water. Next, the following were placed into a separate polymerization can B and stirred to produce an emulsion: 75.0 parts of 2-ethylhexyl acrylate as a (meth)acrylic acid ester monomer, 22.0 parts of acrylonitrile as an $\alpha$,$\beta$-unsaturated nitrile monomer, 2.0 parts of itaconic acid as a monomer containing an acid group, 1.0 parts of 2-hydroxyethyl-acrylate as a monomer containing a hydroxy group, 0.8 parts of sodium dodecyldiphenylether sulfonate as an emulsifier, and 74 parts of deionized water. The produced emulsion was gradually added to polymerization can A from polymerization can B over a period of about 200 minutes, and then stirred for about 180 minutes until the monomer conversion rate reached at least 97%. The mixture was then cooled to complete the reaction. Thereafter, the pH was adjusted using a 4% NaOH aqueous solution, and the unreacted monomer was removed by distillation under heating and reduced pressure to obtain a water dispersion of an acrylic polymer. The pH of the resulting water dispersion was 8.0, and the acrylic polymer had a glass-transition temperature of -40°C and a particle size of 190 nm in a dispersed state.

<Preparation of Slurry Composition for Positive Electrode of Lithium Ion Secondary Battery>

A planetary mixer equipped with a disper blade was charged with 100 parts of $Li(Ni_{0.5}Co_{0.3}Mn_{0.2})O_2$, the surface of which is coated with a coating resin having an SP value of 9.0 $(cal/cm^3)^{1/2}$, as a positive electrode active material; 2.0 parts of acetylene black (DENKA BLACK HS-100, manufactured by DENKI KAGAKU KOGYO KABUSHIKI KAISHA), as a conductive material; 50 parts of carboxymethyl cellulose water solution (2% solid content concentration, viscosity of 1% water solution of approximately 3500 mPa·s; MAC350HC manufactured by Nippon Paper Industries), whose degree of etherification is 0.8, as a viscosity modifier; and a moderate amount of water. The charged components were mixed at 25°C for 60 minutes. To the resulting mixed solution, 2.38 parts of the above-described particulate binder in the form of a water dispersion of acrylic polymer (40% solid content concentration); 0.12 parts of the prepared water-soluble polymer water solution (40% solid content concentration); 0.04 parts of sodium dioctylsulfosuccinate as a salt of sulfosuccinic acid ester (4.0 parts per 100 parts of the total amount in terms of solid content of the particulate binder and the water-soluble polymer, and 80 parts per 100 parts of the water-soluble polymer); and water were added to adjust the solid content concentration to 62%. The result was then mixed at 25°C for 15 minutes to obtain a mixed solution. The obtained solution was subjected to a defoaming process under reduced pressure to provide the slurry composition for the positive electrode of a lithium ion secondary battery.

<Production of Positive Electrode for Lithium Ion Secondary Battery>

The slurry composition for the positive electrode of a lithium ion secondary battery obtained as above was applied onto a current collector made of aluminum foil having a thickness of 20 $\mu$m using a comma coater such that the

film thickness after drying could be about 70 μm. The current collector with the slurry composition being applied was dried for 2 minutes by being transported through an oven at 60°C at a rate of 0.5 m/min, and heated at 120°C for 2 minutes to obtain a web of electrode (or specifically a web of positive electrode). The web of positive electrode obtained was then rolled by roll pressing to produce the positive electrode for a lithium ion secondary battery having a thickness of the positive electrode mixed material layer of 45 μm.

The web of positive electrode and the positive electrode thus produced were evaluated for the number of defects on the electrode surface, smoothness of the positive electrode mixed material layer, and peel strength. The results are shown in Table 1.

<Production of Negative Electrode for Lithium Ion Secondary Battery>

A planetary mixer equipped with a disper blade was charged with 100 parts of artificial graphite having a specific surface area of 4 $m^2/g$ and an average particle size of 24.5 μm as a negative electrode active material; and 50 parts of carboxymethyl cellulose aqueous solution (2% solid content concentration), whose degree of etherification is 0.8, as a viscosity modifier. The mixer was further charged with an appropriate amount of deionized water, and the mixture was mixed at 25°C for 60 minutes. Subsequently, deionized water was added to adjust the solid content concentration to 52%, and then the mixture was further mixed at 25°C for 15 minutes to obtain a mixed solution. To the mixed solution, 2 parts (40% solid content concentration) of styrene-butadiene copolymer, having a particle size of 140 nm and a glass-transition temperature (Tg) of 10°C, as a particulate binder; and deionized water were added to adjust the final solid content concentration to 42%, and then the mixture was mixed for an additional 10 minutes. The resulting mixed solution was subjected to a defoaming process under reduced pressure to yield the slurry composition for the negative electrode of a lithium ion secondary battery.

The slurry composition for the negative electrode of a lithium ion secondary battery produced as above was applied onto a piece of copper foil having a thickness of 20 μm using a comma coater, such that the film thickness after drying could become about 150 μm. The copper foil with the slurry composition applied was dried for 2 minutes by being transported through an oven at 60°C at a rate of 0.5 m/min, and heated at 120°C for 2 minutes to obtain a web of electrode (or specifically a web of negative electrode). The web of negative electrode obtained was then rolled by roll pressing to produce the negative electrode for a lithium ion secondary battery having a thickness of the negative electrode mixed material layer of 80 μm.

<Production of Lithium Ion Secondary Battery>

The positive electrode for a lithium ion secondary battery produced as above was placed such that the surface of the current collector contacts with the exterior package made of aluminum. On the surface of the positive electrode mixed material layer of the positive electrode, a single layer separator made of polypropylene was placed. The separator, produced by a dry method, has a width of 65 mm, a length of 500 mm, and a thickness of 25 μm; and a porosity of 55%. On the separator, the negative electrode for a lithium ion secondary battery produced as above was placed so that the surface of the negative electrode mixed material layer of the negative electrode faces the separator. To this, a $LiPF_6$ solution at a concentration of 1.0 M, which is an electrolysis solution, was charged. The solvent of the $LiPF_6$ solution was a mixture of ethylene carbonate/ethylmethyl carbonate whose ratio was 3/7 in volume, to which vinylene carbonate was added as an additive in an amount of 2% by volume in a ratio of solvent. The aluminum exterior package was then closed with heat sealing at 150°C to tightly seal up the opening of the aluminum packaging material, and the lithium ion secondary battery was accordingly produced.

The lithium ion secondary battery produced as above was evaluated for its output characteristics.

The results are shown in Table 1.

(EXAMPLE 2)

Other than using 100 parts of $Li(Ni_{0.5}Co_{0.3}Mn_{0.2})O_2$, the surface of which is not coated with a coating resin, as the positive electrode active material, the procedure of Example 1 was followed to produce the water-soluble polymer, the particulate binder, the slurry composition for the positive electrode of a lithium ion secondary battery, the positive electrode for a lithium ion secondary battery, the negative electrode for a lithium ion secondary battery, and the lithium ion secondary battery. The products were evaluated for the number of defects on the electrode surface, smoothness of the positive electrode mixed material layer, peel strength, and output characteristics. The results are shown in Table 1.

(EXAMPLE 3)

Other than using 2.0 parts of Ketjen black (EC-300J, manufactured by Lion Corporation; primary particle size:

about 40 nm) as the conductive material, the procedure of Example 1 was followed to produce the water-soluble polymer, the particulate binder, the slurry composition for the positive electrode of a lithium ion secondary battery, the positive electrode for a lithium ion secondary battery, the negative electrode for a lithium ion secondary battery, and the lithium ion secondary battery. The products were evaluated for the number of defects on the electrode surface, smoothness of the positive electrode mixed material layer, peel strength, and output characteristics. The results are shown in Table 1.

(EXAMPLE 4)

Other than using 100 parts of $LiCoO_2$, the surface of which is not coated with a coating resin, as the positive electrode active material, the procedure of Example 1 was followed to produce the water-soluble polymer, the particulate binder, the slurry composition for the positive electrode of a lithium ion secondary battery, the positive electrode for a lithium ion secondary battery, the negative electrode for a lithium ion secondary battery, and the lithium ion secondary battery. The products were evaluated for the number of defects on the electrode surface, smoothness of the positive electrode mixed material layer, peel strength, and output characteristics. The results are shown in Table 1.

(EXAMPLE 5)

Other than using 100 parts of olivine-type lithium iron phosphate ($LiFePO_4$), the surface of which is not coated with a coating resin, as the positive electrode active material, and changing the blending amount of acetylene black to 5.0 parts, the blending amount of carboxymethyl cellulose to 2.0 parts in terms of solid content, the blending amount of the particulate binder to 2.85 parts in terms of solid content, the blending amount of the water-soluble polymer to 0.15 parts in terms of solid content, and the blending amount of sodium dioctylsulfosuccinate to 0.12 parts (4.0 parts per 100 parts of the total amount in terms of solid content of the particulate binder and the water-soluble polymer), the procedure of Example 1 was followed to produce the water-soluble polymer, the particulate binder, the slurry composition for the positive electrode of a lithium ion secondary battery, the positive electrode for a lithium ion secondary battery, the negative electrode for a lithium ion secondary battery, and the lithium ion secondary battery. The products were evaluated for the number of defects on the electrode surface, smoothness of the positive electrode mixed material layer, peel strength, and output characteristics. The results are shown in Table 1.

(EXAMPLES 6-7)

Other than using 0.04 parts each of sodium diamylsulfosuccinate (Example 6) and sodium monooctylsulfosuccinate (Example 7) as the surfactant, the procedure of Example 1 was followed to produce the water-soluble polymer, the particulate binder, the slurry composition for the positive electrode of a lithium ion secondary battery, the positive electrode for a lithium ion secondary battery, the negative electrode for a lithium ion secondary battery, and the lithium ion secondary battery. The products were evaluated for the number of defects on the electrode surface, smoothness of the positive electrode mixed material layer, peel strength, and output characteristics. The results are shown in Table 1.

(EXAMPLES 8-11)

Other than varying the blending amount of the sodium dioctylsulfosuccinate blended in as the surfactant, as shown in Table 1, the procedure of Example 1 was followed to produce the water-soluble polymer, the particulate binder, the slurry composition for the positive electrode of a lithium ion secondary battery, the positive electrode for a lithium ion secondary battery, the negative electrode for a lithium ion secondary battery, and the lithium ion secondary battery. The products were evaluated for the number of defects on the electrode surface, smoothness of the positive electrode mixed material layer, peel strength, and output characteristics. The results are shown in Table 1.

(EXAMPLES 12-15)

Other than varying the blending amounts of the particulate binder and the water-soluble polymer produced with the procedure of Example 1. as shown in Table 2, the procedure of Example 1 was followed to produce the water-soluble polymer, the particulate binder, the slurry composition for the positive electrode of a lithium ion secondary battery, the positive electrode for a lithium ion secondary battery, the negative electrode for a lithium ion secondary battery, and the lithium ion secondary battery. The products were evaluated for the number of defects on the electrode surface, smoothness of the positive electrode mixed material layer, peel strength, and output characteristics. The results are shown in Table 2.

(EXAMPLES 16-23)

Other than varying the blending of the monomers used to prepare the water-soluble polymer as shown in Table 2, the procedure of Example 1 was followed to produce the water-soluble polymer, the particulate binder, the slurry composition for the positive electrode of a lithium ion secondary battery, the positive electrode for a lithium ion secondary battery, the negative electrode for a lithium ion secondary battery, and the lithium ion secondary battery. The viscosity of a 1% water solution of the water-soluble polymer was 32 mPa·s in Example 16, 155 mPa·s in Example 17, 78 mPa·s in Example 18, 78 mPa·s in Example 19, 81 mPa·s in Example 20, 33 mPa·s in Example 21, 85 mPa·s in Example 22, and 41 mPa·s in Example 23. The products were evaluated for the number of defects on the electrode surface, smoothness of the positive electrode mixed material layer, peel strength, and output characteristics. The results are shown in Table 2.

(COMPARATIVE EXAMPLE 1)

Other than not blending in a water-soluble polymer, the procedure of Example 1 was followed to produce the particulate binder, the slurry composition for the positive electrode of a lithium ion secondary battery, the positive electrode for a lithium ion secondary battery, the negative electrode for a lithium ion secondary battery, and the lithium ion secondary battery. In this example, the web of positive electrode obtained had a considerably large difference in thickness between the edge portion and the center portion in the positive electrode active material layer, which did not allow uniform pressure application to the surface of the web of positive electrode upon roll pressing. The products were then evaluated for the number of defects on the electrode surface, smoothness of the positive electrode active material layer, peel strength, and output characteristics. The results are shown in Table 3.

(COMPARATIVE EXAMPLE 2)

Other than not blending in sodium dioctylsulfosuccinate as a surfactant, the procedure of Example 1 was followed to produce the water-soluble polymer, the particulate binder, the slurry composition for the positive electrode of a lithium ion secondary battery, the positive electrode for a lithium ion secondary battery, the negative electrode for a lithium ion secondary battery, and the lithium ion secondary battery. The products were evaluated for the number of defects on the electrode surface, smoothness of the positive electrode mixed material layer, peel strength, and output characteristics. The results are shown in Table 3.

(COMPARATIVE EXAMPLE 3)

Other than varying the blending of the monomers used to prepare the water-soluble polymer as shown in Table 3, the procedure of Example 1 was followed to produce the water-soluble polymer, the particulate binder, the slurry composition for the positive electrode of a lithium ion secondary battery, the positive electrode for a lithium ion secondary battery, the negative electrode for a lithium ion secondary battery, and the lithium ion secondary battery. The viscosity of a 1% water solution of the prepared water-soluble polymer was measured as 2,000 mPa·s. The products were evaluated for the number of defects on the electrode surface, smoothness of the positive electrode mixed material layer, peel strength, and output characteristics. The results are shown in Table 3.

(COMPARATIVE EXAMPLES 4-6)

Other than changing the positive electrode active material to $LiCoO_2$, the surface of which is not coated with a coating resin, the procedures of Comparative Examples 1 to 3 were followed to produce the water-soluble polymer, the particulate binder, the slurry composition for the positive electrode of a lithium ion secondary battery, the positive electrode for a lithium ion secondary battery, the negative electrode for a lithium ion secondary battery, and the lithium ion secondary battery. The products were evaluated for the number of defects on the electrode surface, smoothness of the positive electrode mixed material layer, peel strength, and output characteristics. The results are shown in Table 3.

[Table 1]

| | | | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|---|
| Slurry composition | positive electrode active material | $Li(Ni_{0.5}Co_{0.2}Mn_{0.3})O_2$ (coated) [parts by mass] | | 100 | - | 100 | - | - | 100 | 100 | 100 | 100 | 100 | 100 |
| | | $Li(Ni_{0.5}Co_{0.2}Mn_{0.3})O_2$ (not coated) [parts by mass] | | - | 100 | - | - | - | - | - | - | - | - | - |
| | | $LiCoO_2$ (not coated) [parts by mass] | | - | - | - | 100 | - | - | - | - | - | - | - |
| | | $LiFePO_4$ (not coated) [parts by mass] | | - | - | - | - | 100 | - | - | - | - | - | - |
| | conductive material | acetylene black [parts by mass] | | 2 | 2 | - | 2 | 5 | 2 | 2 | 2 | 2 | 2 | 2 |
| | | Ketjen black [parts by mass] | | - | - | 2 | - | - | - | - | - | - | - | - |
| | viscosity modifier | carboxymethyl cellulose (in terms of solid content) [parts by mass] | | 1 | 1 | 1 | 1 | 2 | 1 | 1 | 1 | 1 | 1 | 1 |
| | water-soluble polymer containing an acid group | blending amount (in terms of solid content) [parts by mass] *1 | | 0.05 | 0.05 | 0.05 | 0.05 | 0.15 | 0.05 | 0.05 | 0.05 | 0.05 | 0.05 | 0.05 |
| | | monomer containing an acid group | methacrylic acid [parts by mass] | 32.5 | 32.5 | 32.5 | 32.5 | 32.5 | 32.5 | 32.5 | 32.5 | 32.5 | 32.5 | 32.5 |
| | | | acrylic acid [parts by mass] | - | - | - | - | - | - | - | - | - | - | - |
| | | | 2-acrylamide-2-methyl propane sulfonic acid [parts by mass] | - | - | - | - | - | - | - | - | - | - | - |
| | | fluorine-containing monomer | 2,2,2-trifluoroethyl methacrylate [parts by mass] | 7.5 | 7.5 | 7.5 | 7.5 | 7.5 | 7.5 | 7.5 | 7.5 | 7.5 | 7.5 | 7.5 |
| | | | perfluorooctyl acrylate [parts by mass] | - | - | - | - | - | - | - | - | - | - | - |
| | | other | (meth)acrylic acid ester monomer (ethyl acrylate) [parts by mass] | 58.2 | 58.2 | 58.2 | 58.2 | 58.2 | 58.2 | 58.2 | 58.2 | 58.2 | 58.2 | 58.2 |
| | | | cross-linkable monomer (ethylene dimethacrylate) [parts by mass] | 0.8 | 0.8 | 0.8 | 0.8 | 0.8 | 0.8 | 0.8 | 0.8 | 0.8 | 0.8 | 0.8 |
| | | | reactive surfactant (polyoxyalkylene alkenyl ether ammonium sulfate) [parts by mass] | 1.0 | 1.0 | 1.0 | 1.0 | 1.0 | 1.0 | 1.0 | 1.0 | 1.0 | 1.0 | 1.0 |
| | | viscosity of 1% by mass water solution [mPa·s] | | 68 | 68 | 68 | 68 | 68 | 68 | 68 | 68 | 68 | 68 | 68 |
| | particulate binder | blending amount (in terms of solid content) [parts by mass] *1 | | 0.95 | 0.95 | 0.95 | 0.95 | 2.85 | 0.95 | 0.95 | 0.95 | 0.95 | 0.95 | 0.95 |
| | | a,b-unsaturated nitrile monomer | acrylonitrile [parts by mass] | 22 | 22 | 22 | 22 | 22 | 22 | 22 | 22 | 22 | 22 | 22 |
| | | (meth)acrylic acid ester monomer | 2-ethylhexyl acrylate [parts by mass] | 75 | 75 | 75 | 75 | 75 | 75 | 75 | 75 | 75 | 75 | 75 |
| | | monomer containing an acid group | itaconic acid [parts by mass] | 2 | 2 | 2 | 2 | 2 | 2 | 2 | 2 | 2 | 2 | 2 |
| | | monomer containing a hydroxy group | 2-hydroxyethyl-acrylate [parts by mass] | 1 | 1 | 1 | 1 | 1 | 1 | 1 | 1 | 1 | 1 | 1 |
| | | emulsifier | sodium dodecyldiphenylether sulfonate [parts by mass] | 1 | 1 | 1 | 1 | 1 | 1 | 1 | 1 | 1 | 1 | 1 |
| | | particle size [nm] | | 180 | 180 | 180 | 180 | 180 | 180 | 180 | 180 | 180 | 180 | 180 |
| | blending amount (water-soluble polymer containing an acid group + particulate binder) [parts by mass] *1 | | | 1 | 1 | 1 | 1 | 3 | 1 | 1 | 1 | 1 | 1 | 1 |
| | blending ratio (particulate binder : water-soluble polymer) | | | 95:5 | 95:5 | 95:5 | 95:5 | 95:5 | 95:5 | 95:5 | 95:5 | 95:5 | 95:5 | 95:5 |
| | surfactant | sulfosuccinic acid esters and salts thereof *1 | sodium dioctyl sulfosuccinate [parts by mass] | 0.04 | 0.04 | 0.04 | 0.04 | 0.12 | - | - | 0.01 | 0.05 | 0.06 | 0.08 |
| | | | sodium diamyl sulfosuccinate [parts by mass] | - | - | - | - | - | 0.04 | - | - | - | - | - |
| | | | sodium monooctyl sulfosuccinate [parts by mass] | - | - | - | - | - | - | 0.04 | - | - | - | - |
| | | blending amount per 100 parts by mass of water-soluble polymer [parts by mass] | | 80 | 80 | 80 | 80 | 26.7 | 80 | 80 | 20 | 100 | 120 | 160 |
| | | blending ratio with respect to total amount of particulate binder and water-soluble polymer [% by mass] | | 4 | 4 | 4 | 4 | 4 | 4 | 4 | 1 | 5 | 6 | 8 |
| Evaluation results | number of defects on electrode surface | | | A | A | A | A | A | A | B | B | A | A | A |
| | smoothness of positive electrode active material layer | | | A | A | A | A | A | A | A | A | A | A | A |
| | peel strength | | | A | A | B | A | A | A | A | B | A | A | A |
| | output characteristics | | | A | B | C | A | A | A | A | B | A | B | C |

*1 Blending amount per 100 parts by mass of positive electrode active material

[Table 2]

| | | | | Example 12 | Example 13 | Example 14 | Example 15 | Example 16 | Example 17 | Example 18 | Example 19 | Example 20 | Example 21 | Example 22 | Example 23 |
|---|---|---|---|---|---|---|---|---|---|---|---|---|---|---|---|
| Slurry composition | positive electrode active material | $Li(Ni_{0.5}Co_{0.2}Mn_{0.3})O_2$ (coated) [parts by mass] | | 100 | 100 | 100 | 100 | 100 | 100 | 100 | 100 | 100 | 100 | 100 | 100 |
| | | $Li(Ni_{0.5}Co_{0.2}Mn_{0.3})O_2$ (not coated) [parts by mass] | | - | - | - | - | - | - | - | - | - | - | - | - |
| | | $LiCoO_2$ (not coated) [parts by mass] | | - | - | - | - | - | - | - | - | - | - | - | - |
| | | $LiFePO_4$ (not coated) [parts by mass] | | - | - | - | - | - | - | - | - | - | - | - | - |
| | conductive material | acetylene black [parts by mass] | | 1 | 1 | 1 | 1 | 1 | 1 | 1 | 1 | 1 | 1 | 1 | 1 |
| | | Ketjen black [parts by mass] | | - | - | - | - | - | - | - | - | - | - | - | - |
| | viscosity modifier | carboxymethyl cellulose (in terms of solid content) [parts by mass] | | 2 | 2 | 2 | 2 | 2 | 2 | 2 | 2 | 2 | 2 | 2 | 2 |
| | water-soluble polymer containing an acid group | blending amount (in terms of solid content) [parts by mass] *1 | | 0.02 | 0.15 | 0.4 | 0.4 | 0.05 | 0.05 | 0.05 | 0.05 | 0.05 | 0.05 | 0.05 | 0.05 |
| | | monomer containing an acid group | methacrylic acid [parts by mass] | 32.5 | 32.5 | 32.5 | 32.5 | 22 | 68 | 30 | - | 30 | 32.5 | 32.5 | 32.5 |
| | | | acrylic acid [parts by mass] | - | - | - | - | - | - | - | 30 | - | - | - | - |
| | | | 2-acrylamide-2-methyl propane sulfonic acid [parts by mass] | - | - | - | - | - | - | 2.5 | 2.5 | 2.5 | - | - | - |
| | | fluorine-containing monomer | 2,2,2-trifluoroethyl methacrylate [parts by mass] | 7.5 | 7.5 | 7.5 | 7.5 | 7.5 | 7.5 | 7.5 | - | - | | 3 | 20 |
| | | | perfluorooctyl acrylate [parts by mass] | - | - | - | - | - | - | - | - | - | 7.5 | - | - |
| | | other | (meth)acrylic acid ester monomer (ethyl acrylate) [parts by mass] | 58.2 | 58.2 | 58.2 | 58.2 | 68.7 | 22.7 | 58.2 | 65.7 | 65.7 | 58.2 | 62.7 | 45.7 |
| | | | cross-linkable monomer (ethylene dimethacrylate) [parts by mass] | 0.8 | 0.8 | 0.8 | 0.8 | 0.8 | 0.8 | 0.8 | 0.8 | 0.8 | 0.8 | 0.8 | 0.8 |
| | | | reactive surfactant (polyoxyalkylene alkenyl ether ammonium sulfate) [parts by mass] | 1.0 | 1.0 | 1.0 | 1.0 | 1.0 | 1.0 | 1.0 | 1.0 | 1.0 | 1.0 | 1.0 | 1.0 |
| | | viscosity of 1% by mass water solution [mPa·s] | | 68 | 68 | 68 | 68 | 32 | 155 | 78 | 78 | 81 | 33 | 85 | 41 |
| | particulate binder | blending amount (in terms of solid content) [parts by mass] *1 | | 0.98 | 0.85 | 0.6 | 0.6 | 0.95 | 0.95 | 0.95 | 0.95 | 0.95 | 0.95 | 0.95 | 0.95 |
| | | a,b-unsaturated nitrile monomer | acrylonitrile [parts by mass] | 22 | 22 | 22 | 22 | 22 | 22 | 22 | 22 | 22 | 22 | 22 | 22 |
| | | (meth)acrylic acid ester monomer | 2-ethylhexyl acrylate [parts by mass] | 75 | 75 | 75 | 75 | 75 | 75 | 75 | 75 | 75 | 75 | 75 | 75 |
| | | monomer containing an acid group | itaconic acid [parts by mass] | 2 | 2 | 2 | 2 | 2 | 2 | 2 | 2 | 2 | 2 | 2 | 2 |
| | | monomer containing a hydroxy group | 2-hydroxyethyl-acrylate [parts by mass] | 1 | 1 | 1 | 1 | 1 | 1 | 1 | 1 | 1 | 1 | 1 | 1 |
| | | emulsifier | sodium dodecyldiphenylether sulfonate [parts by mass] | 1 | 1 | 1 | 1 | 1 | 1 | 1 | 1 | 1 | 1 | 1 | 1 |
| | | particle size [nm] | | 180 | 180 | 180 | 180 | 180 | 180 | 180 | 180 | 180 | 180 | 180 | 180 |
| | blending amount (water-soluble polymer containing an acid group + particulate binder) [parts by mass] *1 | | | 1 | 1 | 1 | 1 | 1 | 1 | 1 | 1 | 1 | 1 | 1 | 1 |
| | blending ratio (particulate binder : water-soluble polymer) | | | 98:2 | 85:15 | 60:40 | 60:40 | 95:5 | 95:5 | 95:5 | 95:5 | 95:5 | 95:5 | 95:5 | 95:5 |
| | surfactant | sulfosuccinic acid esters and salts thereof *1 | sodium dioctyl sulfosuccinate [parts by mass] | 0.04 | 0.04 | 0.04 | 0.08 | 0.04 | 0.04 | 0.04 | 0.04 | 0.04 | 0.04 | 0.04 | 0.04 |
| | | | sodium diamyl sulfosuccinate [parts by mass] | - | - | - | - | - | - | - | - | - | - | - | - |
| | | | sodium monooctyl sulfosuccinate [parts by mass] | - | - | - | - | - | - | - | - | - | - | - | - |
| | | blending amount per 100 parts by mass of water-soluble polymer [parts by mass] | | 200 | 26.7 | 10 | 20 | 80 | 80 | 80 | 80 | 80 | 80 | 80 | 80 |
| | | blending ratio with respect to total amount of particulate binder and water-soluble polymer [% by mass] | | 4 | 4 | 4 | 8 | 4 | 4 | 4 | 4 | 4 | 4 | 4 | 4 |
| Evaluation results | number of defects on electrode surface | | | A | A | B | A | A | B | A | A | A | B | A | B |
| | smoothness of positive electrode active material layer | | | B | A | A | A | A | A | A | B | B | A | A | A |
| | peel strength | | | B | A | A | A | B | A | A | A | A | B | A | B |
| | output characteristics | | | C | A | B | C | A | B | A | B | B | B | A | B |

*1 Blending amount per 100 parts by mass of positive electrode active material

[Table 3]

| | | | | Comparative Example 1 | Comparative Example 2 | Comparative Example 3 | Comparative Example 4 | Comparative Example 5 | Comparative Example 6 |
|---|---|---|---|---|---|---|---|---|---|
| Slurry composition | positive electrode active material | $Li(Ni_{0.5}Co_{0.2}Mn_{0.3})O_2$ (coated) [parts by mass] | | 100 | 100 | 100 | - | - | - |
| | | $Li(Ni_{0.5}Co_{0.2}Mn_{0.3})O_2$ (not coated) [parts by mass] | | - | - | - | - | - | - |
| | | $LiCoO_2$ (not coated) [parts by mass] | | - | - | - | 100 | 100 | 100 |
| | | $LiFePO_4$ (not coated) [parts by mass] | | - | - | - | - | - | - |
| | conductive material | acetylene black [parts by mass] | | 2 | 2 | 2 | 2 | 2 | 2 |
| | | Ketjen black [parts by mass] | | - | - | - | - | - | - |
| | viscosity modifier | carboxymethyl cellulose (in terms of solid content) [parts by mass] | | 1 | 1 | 1 | 1 | 1 | 1 |
| | water-soluble polymer containing an acid group | blending amount (in terms of solid content) [parts by mass] *1 | | 0 | 0.05 | 0.05 | 0 | 0.05 | 0.05 |
| | | monomer containing an acid group | methacrylic acid [parts by mass] | - | 32.5 | - | - | 32.5 | - |
| | | | acrylic acid [parts by mass] | - | - | 90 | - | - | 90 |
| | | | 2-acrylamide-2-methyl propane sulfonic acid [parts by mass] | - | - | - | - | - | - |
| | | fluorine-containing monomer | 2,2,2-trifluoroethyl methacrylate [parts by mass] | - | - | 7.5 | - | 7.5 | - |
| | | | perfluorooctyl acrylate [parts by mass] | - | - | - | - | - | - |
| | | other | (meth)acrylic acid ester monomer (ethyl acrylate) [parts by mass] | - | 58.2 | 8.2 | - | 58.2 | 8.2 |
| | | | cross-linkable monomer (ethylene dimethacrylate) [parts by mass] | - | 0.8 | 0.8 | - | 0.8 | 0.8 |
| | | | reactive surfactant (polyoxyalkylene alkenyl ether ammonium sulfate) [parts by mass] | - | 1.0 | 1.0 | - | 1.0 | 1.0 |
| | | viscosity of 1% by mass water solution [mPa·s] | | - | 68 | 2000 | - | 68 | 2000 |
| | particulate binder | blending amount (in terms of solid content) [parts by mass] *1 | | 1 | 0.95 | 0.95 | 1 | 0.95 | 0.95 |
| | | a,b-unsaturated nitrile monomer | acrylonitrile [parts by mass] | 22 | 22 | 22 | 22 | 22 | 22 |
| | | (meth)acrylic acid ester monomer | 2-ethylhexyl acrylate [parts by mass] | 75 | 75 | 75 | 75 | 75 | 75 |
| | | monomer containing an acid group | itaconic acid [parts by mass] | 2 | 2 | 2 | 2 | 2 | 2 |
| | | monomer containing a hydroxy group | 2-hydroxyethyl-acrylate [parts by mass] | 1 | 1 | 1 | 1 | 1 | 1 |
| | | emulsifier | sodium dodecyldiphenylether sulfonate [parts by mass] | 1 | 1 | 1 | 1 | 1 | 1 |
| | | particle size [nm] | | 180 | 180 | 180 | 180 | 180 | 180 |
| | blending amount (water-soluble polymer containing an acid group + particulate binder) [parts by mass] *1 | | | 1 | 1 | 1 | 1 | 1 | 1 |
| | blending ratio (particulate binder : water-soluble polymer) | | | 100:0 | 95:5 | 95:5 | 100:0 | 95:5 | 95:5 |
| | surfactant | sulfosuccinic acid esters and salts thereof *1 | sodium dioctyl sulfosuccinate [parts by mass] | 0.04 | - | 0.04 | 0.04 | - | 0.04 |
| | | | sodium diamyl sulfosuccinate [parts by mass] | - | - | - | - | - | - |
| | | | sodium monooctyl sulfosuccinate [parts by mass] | - | - | - | - | - | - |
| | | blending amount per 100 parts by mass of water-soluble polymer [parts by mass] | | - | - | 80 | - | - | 80 |
| | | blending ratio with respect to total amount of particulate binder and water-soluble polymer [% by mass] | | 4 | - | 4 | 4 | - | 4 |
| Evaluation results | number of defects on electrode surface | | | A | C | C | A | C | C |
| | smoothness of positive electrode active material layer | | | C | A | B | C | A | B |
| | peel strength | | | D | B | B | D | B | B |
| | output characteristics | | | E | D | D | E | D | D |

*1 Blending amount per 100 parts by mass of positive electrode active material

Tables 1 and 2 demonstrate that in Examples 1 to 23, in which a predetermined water-soluble polymer and a sulfosuccinic acid ester or a salt thereof were used together, the generation of pin holes (number of defects on the electrode surface) and the occurrence of bulging along the edge portion of the positive electrode active material layer (smoothness of positive electrode active material layer) could both be suppressed.

Conversely, Table 3 demonstrates that in Comparative Examples 1 to 4, in which a water-soluble polymer was not used, the occurrence of bulging along the edge portion of the positive electrode active material layer could not be suppressed, and good peel strength and battery characteristics of the secondary battery could not be obtained. Table 3 further demonstrates that in Comparative Examples 2 and 5, which did not use the sulfosuccinic acid ester or a salt thereof, the generation of pin holes could not be suppressed, and a secondary battery with good battery characteristics could not be obtained. Table 3 further demonstrates that in Comparative Examples 3 and 6, in which the viscosity of 1% by mass of the water-soluble polymer was high, the generation of pin holes could not be suppressed, and moreover a secondary battery with good battery characteristics could not be obtained.

In particular, Examples 1 and 2 in Table 1 demonstrate that even if the positive electrode active material containing Ni or Mn is used, coating of the positive electrode active material prevents corrosion and thus provides better output characteristics. Examples 1 and 3 further demonstrate that use of acetylene black as a conductive material provides better output characteristics.

Examples 1, 6, and 7 in Table 1 also demonstrate that using a dialkylsulfosuccinate salt can better suppress the generation of pin holes. Examples 1 and 8 to 11 in Table 1 demonstrate that by adjusting the blending amount of the sulfosuccinic acid ester or a salt thereof, both the generation of pin holes and the occurrence of bulging along the edge portion of the positive electrode active material layer can be suppressed, while achieving better peel strength and output characteristics. Furthermore, Example 1 and Examples 12 to 15 in Tables 1 and 2 demonstrate that by suitably selecting the blending amounts of the particulate binder, the water-soluble polymer, and the sulfosuccinic acid ester or a salt thereof, both the generation of pin holes and the occurrence of bulging along the edge portion of the positive electrode active material layer can be suppressed, while achieving better output characteristics and peel strength. Furthermore, Example 1 and Examples 16 to 23 in Tables 1 and 2 demonstrate that by suitably selecting the ratio of the monomer units included in the water-soluble polymer, the rheology of the slurry can be adjusted, thereby allowing both the generation of pin holes and the occurrence of bulging along the edge portion of the positive electrode active material layer to be suppressed, while achieving better output characteristics and peel strength. Among these results, Examples 1 and 21 in Tables 1 and 2 demonstrate that suitably selecting the amount of fluorine contained in the water-soluble polymer allows avoidance of an excessive reduction in the surface energy of the slurry composition, which would facilitate bubbling of the slurry composition.

To confirm that the sulfosuccinic acid ester or a salt thereof used in polymerization of the particulate binder demonstrates the same effects, the water-soluble polymer, the particulate binder, the slurry composition for the positive electrode of a lithium ion secondary battery, the positive electrode for a lithium ion secondary battery, and the lithium ion secondary battery were produced following the same procedures as those carried out for Examples 1 to 23, except that the total amount of the sulfosuccinic acid ester or a salt thereof was charged into polymerization can B to carry out polymerization. The products were then evaluated, and the results thereof were the same as the results obtained for Examples 1 to 23.

## INDUSTRIAL APPLICABILITY

This disclosure provides an aqueous slurry composition for the positive electrode of a lithium ion secondary battery that achieves suppression of both the generation of pin holes and the occurrence of bulging along the edge portion of the positive electrode active material layer. This disclosure also provides a method of producing a positive electrode for a lithium ion secondary battery formed with the aforementioned aqueous slurry composition.

This disclosure also provides a positive electrode for a lithium ion secondary battery that achieves suppression of both the generation of pin holes and the occurrence of bulging along the edge portion of the positive electrode active material layer. This disclosure also provides a lithium ion secondary battery including the aforementioned positive electrode for a lithium ion secondary battery and having good electrical characteristics.

## Claims

**1.** A slurry composition for a positive electrode of a lithium ion secondary battery, the slurry composition comprising:

a positive electrode active material; a conductive material; a water-soluble polymer; a particulate binder; a surfactant; and water, **characterized in that**
the water-soluble polymer contains a monomer unit containing an acid group, and viscosity of a 1% by mass

water solution of the water-soluble polymer is 1 mPa•s or greater to 1,000 mPa•s or less, wherein the ratio of the monomer unit containing an acid group in the water-soluble polymer is 20% by mass or greater and 70% by mass or less, and
the surfactant includes a sulfosuccinic acid ester or a salt thereof.

**2.** The slurry composition for a positive electrode of a lithium ion secondary battery of claim 1, wherein the ratio of the cross-linkable monomer unit in the water-soluble polymer is 0.1% by mass or greater and 2% by mass or less.

**3.** The slurry composition for a positive electrode of a lithium ion secondary battery of claim 1 or 2, wherein the ratio of the reactive surfactant unit in the water-soluble polymer is 0.1% by mass or greater and 15% by mass or less.

**4.** The slurry composition for a positive electrode of a lithium ion secondary battery of any one of claims 1 to 3, wherein an amount of the sulfosuccinic acid ester or a salt thereof is 10 parts by mass or greater to 200 parts by mass or less per 100 parts by mass of solid content of the water-soluble polymer that contains the monomer unit containing an acid group.

**5.** The slurry composition for a positive electrode of a lithium ion secondary battery of any one of claims 1 to 4, wherein an amount of the sulfosuccinic acid ester or a salt thereof is 0.1 parts by mass or greater to 10 parts by mass or less per 100 parts by mass of a total of solid content of the particulate binder and solid content of the water-soluble polymer that contains the monomer unit containing an acid group.

**6.** The slurry composition for a positive electrode of a lithium ion secondary battery of any one of claims 1 to 5, wherein the water-soluble polymer contains at least one of a monomer unit containing a carboxylic acid group and a monomer unit containing a sulfonate group as the monomer unit containing an acid group.

**7.** The slurry composition for a positive electrode of a lithium ion secondary battery of any one of claims 1 to 6, wherein the water-soluble polymer that contains the monomer unit containing an acid group further contains 0.1% to 30% by mass of a fluorine-containing monomer unit.

**8.** The slurry composition for a positive electrode of a lithium ion secondary battery of any one of claims 1 to 7, wherein a mass ratio of the particulate binder to the water-soluble polymer that contains the monomer unit containing an acid group represented by (the particulate binder)/(the water-soluble polymer that contains the monomer unit containing an acid group) is from 99/1 to 50/50.

**9.** A method of producing a positive electrode for a lithium ion secondary battery, the method comprising:

applying the slurry composition for a positive electrode of a lithium ion secondary battery according to any one of claims 1 to 8 onto a current collector; and
drying the slurry composition for a positive electrode of a lithium ion secondary battery applied onto the current collector to form a positive electrode mixed material layer on the current collector.

**10.** A positive electrode for a lithium ion secondary battery, comprising:

a positive electrode active material; a conductive material; a water-soluble polymer; a particulate binder; and a surfactant, **characterized in that**
the water-soluble polymer contains a monomer unit containing an acid group, and viscosity of a 1% by mass water solution of the water-soluble polymer is 1 mPa•s or greater to 1,000 mPa•s or less, wherein the ratio of the monomer unit containing an acid group in the water-soluble polymer is 20% by mass or greater and 70% by mass or less, and
the surfactant includes a sulfosuccinic acid ester or a salt thereof.

**11.** A lithium ion secondary battery comprising: the positive electrode for a lithium ion secondary battery according to claim 10; a negative electrode; an electrolysis solution; and a separator.

## Patentansprüche

**1.** Eine Aufschlämmungs-Zusammensetzung für eine positive Elektrode einer Lithiumionen-Sekundärbatterie, die Aufschlämmungs-Zusammensetzung umfassend:

ein aktives Material für eine positive Elektrode, ein leitfähiges Material, ein wasserlösliches Polymer, ein teilchenförmiges Bindemittel; ein Tensid; und Wasser, **dadurch gekennzeichnet, dass**
das wasserlösliche Polymer eine Monomereinheit enthält, die eine Säuregruppe enthält, und dass die Viskosität einer wässrigen Lösung von 1 Gew.-% des wasserlöslichen Polymers 1 mPa•s oder mehr bis 1000 mPa•s oder weniger beträgt, wobei der Anteil der Monomereinheit, die eine Säuregruppe enthält, im wasserlöslichen Polymer 20 Gew.-% oder mehr und 70 Gew.-% oder weniger beträgt, und
das Tensid einen Sulfobernsteinsäureester oder ein Salz davon umfasst.

**2.** Die Aufschlämmungs-Zusammensetzung für eine positive Elektrode einer Lithiumionen-Sekundärbatterie gemäß Anspruch 1, wobei der Anteil der kreuzreaktiven Monomereinheit im wasserlöslichen Polymer 0,1 Gew.-% oder mehr und 2 Gew.-% oder weniger beträgt.

**3.** Die Aufschlämmungs-Zusammensetzung für eine positive Elektrode einer Lithiumionen-Sekundärbatterie gemäß Anspruch 1 oder 2, wobei der Anteil der reaktiven Tensid-Einheit im wasserlöslichen Polymer 0,1 Gew.-% oder mehr und 15 Gew.-% oder weniger beträgt.

**4.** Die Aufschlämmungs-Zusammensetzung für eine positive Elektrode einer Lithiumionen-Sekundärbatterie gemäß irgendeinem der Ansprüche 1 bis 3, wobei eine Menge des Sulfobernsteinsäureesters oder Salzes davon 10 Gewichtsteile oder mehr bis 200 Gewichtsteile oder weniger pro 100 Gewichtsteilen Feststoffgehalt des wasserlöslichen Polymers, welches die Monomereinheit mit der Säuregruppe enthält, beträgt.

**5.** Die Aufschlämmungs-Zusammensetzung für eine positive Elektrode einer Lithiumionen-Sekundärbatterie gemäß irgendeinem der Ansprüche 1 bis 4, wobei eine Menge des Sulfobernsteinsäureesters oder Salzes davon 0,1 Gewichtsteile oder mehr bis 10 Gewichtsteile oder weniger pro 100 Gewichtsteilen Gesamtfeststoffgehalt von teilchenförmigem Bindemittel und Feststoffgehalt des wasserlöslichen Polymers, welches die Monomereinheit mit der Säuregruppe enthält, beträgt.

**6.** Die Aufschlämmungs-Zusammensetzung für eine positive Elektrode einer Lithiumionen-Sekundärbatterie gemäß irgendeinem der Ansprüche 1 bis 5, wobei das wasserlösliche Polymer wenigstens eine Monomereinheit, welche eine Carbonsäuregruppe enthält, und eine Monomereinheit, welche eine Sulfonatgruppe enthält, als die Monomereinheit, die eine Säuregruppe enthält, enthält.

**7.** Die Aufschlämmungs-Zusammensetzung für eine positive Elektrode einer Lithiumionen-Sekundärbatterie gemäß irgendeinem der Ansprüche 1 bis 6, wasserlösliche Polymer, das die Monomereinheit enthält, die eine Säuregruppe enthält, des weiteren 0,1 Gew.-% bis 30 Gew.-% einer fluorhaltigen Monomereinheit enthält.

**8.** Die Aufschlämmungs-Zusammensetzung für eine positive Elektrode einer Lithiumionen-Sekundärbatterie gemäß irgendeinem der Ansprüche 1 bis 7, wobei ein Gewichtsverhältnis des teilchenförmigen Bindemittels zum wasserlöslichen Polymer, das die Monomereinheit enthält, die eine Säuregruppe enthält, symbolisiert durch (das teilchenförmige Bindemittel)/(das wasserlösliche Polymer, das die Monomereinheit enthält, die eine Säuregruppe enthält) von 99/1 bis 50/50 beträgt.

**9.** Ein Verfahren zur Herstellung einer positiven Elektrode für eine Lithiumionen-Sekundärbatterie, das Verfahren umfassend:

Aufbringen der Aufschlämmungs-Zusammensetzung für eine positive Elektrode einer Lithiumionen-Sekundärbatterie gemäß irgendeinem der Ansprüche 1 bis 8 auf einen Stromkollektor; und
Trocknen der auf den Stromkollektor aufgebrachten Aufschlämmungs-Zusammensetzung für eine positive Elektrode einer Lithiumionen-Sekundärbatterie, um eine positive Elektrodenschicht aus einem Materialmix auf dem Stromkollektor zu erzeugen.

**10.** Eine positive Elektrode für eine Lithiumionen-Sekundärbatterie, umfassend:

ein aktives Material für eine positive Elektrode, ein leitfähiges Material, ein wasserlösliches Polymer, ein teilchenförmiges Bindemittel; und ein Tensid, **dadurch gekennzeichnet, dass**
das wasserlösliche Polymer eine Monomereinheit enthält, die eine Säuregruppe enthält, und dass die Viskosität

einer wässrigen Lösung von 1 Gew.-% des wasserlöslichen Polymers 1 mPa•s oder mehr bis 1000 mPa•s oder weniger beträgt, wobei der Anteil der Monomereinheit, die eine Säuregruppe enthält, im wasserlöslichen Polymer 20 Gew.-% oder mehr und 70 Gew.-% oder weniger beträgt, und
das Tensid einen Sulfobernsteinsäureester oder ein Salz davon umfasst.

**11.** Eine Lithiumionen-Sekundärbatterie, umfassend: die positive Elektrode für eine Lithiumionen-Sekundärbatterie gemäß Anspruch 10; eine negative Elektrode; eine Elektrolytlösung; und einen Separator.

## Revendications

**1.** Composition de boue pour une électrode positive d'une batterie secondaire lithium-ion, la composition de boue comprenant :

un matériau actif d'électrode positive ; un matériau conducteur ; un polymère hydrosoluble ; un liant particulaire ; un tensioactif et de l'eau, **caractérisée en ce que**
le polymère hydrosoluble contient une unité monomère contenant un groupe acide, et la viscosité d'une solution aqueuse à 1 % en masse du polymère hydrosoluble est de 1 mPa·s ou plus à 1000 mPa·s ou moins, dans laquelle le proportion de l'unité monomère contenant un groupe acide dans le polymère hydrosoluble est supérieure ou égale à 20 % en masse et inférieure ou égale à 70 % en masse, et
le tensioactif inclut un ester d'acide sulfosuccinique ou un sel de celui-ci.

**2.** Composition de boue pour une électrode positive d'une batterie secondaire lithium-ion selon la revendication 1, dans laquelle la proportion de l'unité monomère réticulable dans le polymère hydrosoluble est supérieure ou égale à 0,1 % en masse et inférieure ou égale à 2 % en masse.

**3.** Composition de boue pour une électrode positive d'une batterie secondaire lithium-ion selon la revendication 1 ou 2, dans laquelle la proportion de l'unité tensioactif réactif dans le polymère hydrosoluble est supérieure ou égale à 0,1 % en masse et inférieure ou égale à 15 % en masse.

**4.** Composition de boue pour une électrode positive d'une batterie secondaire lithium-ion selon l'une quelconque des revendications 1 à 3, dans laquelle une quantité de l'ester d'acide sulfosuccinique ou d'un sel de celui-ci est de 10 parties en masse ou plus à 200 parties en masse ou moins pour 100 parties en masse de contenu solide du polymère hydrosoluble qui contient l'unité monomère contenant un groupe acide.

**5.** Composition de boue pour une électrode positive d'une batterie secondaire lithium-ion selon l'une quelconque des revendications 1 à 4, dans laquelle une quantité de l'ester d'acide sulfosuccinique ou d'un sel de celui-ci est de 0,1 partie en masse ou plus à 10 parties en masse ou moins pour 100 parties en masse d'un total de contenu solide du liant particulaire et du contenu solide du polymère hydrosoluble qui contient l'unité monomère contenant un groupe acide.

**6.** Composition de boue pour une électrode positive d'une batterie secondaire lithium-ion selon l'une quelconque des revendications 1 à 5, dans laquelle le polymère hydrosoluble contient au moins l'une d'une unité monomère contenant un groupe acide carboxylique et d'une unité monomère contenant un groupe sulfonate en tant qu'unité monomère contenant un groupe acide.

**7.** Composition de boue pour une électrode positive d'une batterie secondaire lithium-ion selon l'une quelconque des revendications 1 à 6, dans laquelle le polymère hydrosoluble qui contient l'unité monomère contenant un groupe acide contient en outre 0,1 % à 30 % en masse d'une unité monomère contenant du fluor.

**8.** Composition de boue pour une électrode positive d'une batterie secondaire lithium-ion selon l'une quelconque des revendications 1 à 7, dans laquelle un rapport massique entre le liant particulaire et le polymère hydrosoluble qui contient l'unité monomère contenant un groupe acide représenté par (le liant particulaire)/(le polymère hydrosoluble qui contient l'unité monomère contenant un groupe acide) est de 99/1 à 50/50.

**9.** Procédé de production d'une électrode positive pour une batterie secondaire lithium-ion, le procédé comprenant :

l'application de la composition de boue pour une électrode positive d'une batterie secondaire lithium-ion selon

l'une quelconque des revendications 1 à 8 sur un collecteur de courant ; et
le séchage de la composition de boue pour une électrode positive d'une batterie secondaire lithium-ion appliquée sur le collecteur de courant pour former une couche de matériau mixte d'électrode positive sur le collecteur de courant.

**10.** Electrode positive pour une batterie secondaire lithium ion, comprenant :

un matériau actif d'électrode positive ; un matériau conducteur ; un polymère hydrosoluble ; un liant particulaire et un tensioactif, **caractérisée en ce que**
le polymère hydrosoluble contient une unité monomère contenant un groupe acide, et la viscosité d'une solution aqueuse à 1 % en masse du polymère hydrosoluble est de 1 mPa·s ou plus à 1000 mPa·s ou moins, dans laquelle la proportion de l'unité monomère contenant un groupe acide dans le polymère hydrosoluble est supérieure ou égale à 20 % en masse et inférieure ou égale à 70 % en masse, et
le tensioactif inclut un ester d'acide sulfosuccinique ou un sel de celui-ci.

**11.** Batterie secondaire lithium-ion comprenant : l'électrode positive pour une batterie secondaire lithium-ion selon la revendication 10 ; une électrode négative ; une solution électrolytique et un séparateur.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H10195310 A
- JP 2013041821 A
- JP 2011134807 A
- JP 2011204573 A
- JP 2012184201 A
- WO 2012036260 A
- JP 2012204303 A